# EUROPÄISCHE PATENTSCHRIFT

(11) **EP 3 183 721 B1**
(45) Veröffentlichungstag und Bekanntmachung des Hinweises auf die Patenterteilung: **19.01.2022**
(21) Anmeldenummer: 15753898.4
(22) Anmeldetag: 17.08.2015
(51) Int. Cl.: G06K 9/00, G06T 7/11, G06T 7/143, G06T 7/194, G06T 7/64, G06T 7/68, G06T 7/73, G08G 1/015, G08G 1/017, G08G 1/04, G08G 1/056

(54) **VERFAHREN UND ACHSENZÄHL-VORRICHTUNG ZUR BERÜHRUNGSLOSEN ACHSENZÄHLUNG EINES FAHRZEUGS SOWIE ACHSENZÄHLSYSTEM FÜR DEN STRASSENVERKEHR**
METHOD AND AXLE-COUNTING DEVICE FOR CONTACT-FREE AXLE COUNTING OF A VEHICLE AND AXLE-COUNTING SYSTEM FOR ROAD TRAFFIC
PROCÉDÉ ET DISPOSITIF DE COMPTAGE SANS CONTACT D'ESSIEUX D'UN VÉHICULE ET SYSTÈME DE COMPTAGE D'ESSIEUX POUR TRAFIC ROUTIER

(30) Priorität: 22.08.2014 DE 102014012285
(43) Veröffentlichungstag der Anmeldung: 28.06.2017
(73) Patentinhaber: Jenoptik Robot GmbH, 40789 Monheim (DE)
(72) Erfinder: THOMMES, Jan, 30167 Hannover (DE); PRÖFROCK, Dima, 31141 Hildesheim (DE); LEHNING, Michael, 31137 Hildesheim (DE); TRUMMER, Michael, 31137 Hildesheim (DE)
(74) Vertreter: Waldauf, Alexander
(86) Internationale Anmeldenummer: PCT/EP2015/001688
(87) Internationale Veröffentlichungsnummer: WO 2016/026568

(56) Entgegenhaltungen:
- EP-A1- 1 361 488
- AT-B- 411 854
- DE-A1- 19 640 938
- DE-A1-102012 113 009
- DE-U1-202009 012 684
- FR-A1- 2 903 519
- US-A1- 2012 020 526
- US-A1- 2013 070 108
- US-A1- 2013 129 144
- US-A1- 2015 227 798

## Beschreibung

### Stand der Technik

Die vorliegende Erfindung bezieht sich auf ein Verfahren zur berührungslosen Achsenzählung eines Fahrzeugs auf einer Fahrbahn, eine Achsenzähl-Vorrichtung zur berührungslosen Achsenzählung eines Fahrzeugs auf einer Fahrbahn, ein entsprechendes Achsenzählsystem für den Straßenverkehr sowie ein entsprechendes Computerprogrammprodukt.

Der Straßenverkehr wird mit messtechnischen Einrichtungen überwacht. Dabei können Systeme beispielsweise Fahrzeuge klassifizieren oder Geschwindigkeiten überwachen. Über in der Fahrbahn eingelassene Induktionsschleifen können berührungslose Achsenzählsysteme realisiert werden.

Die EP 1 361 488 B1 offenbart ein berührungsloses Achsenzählsystem für den Straßenverkehr. Die DE 10 2012 113 009 A1 offenbart ein Verfahren zum Klassifizieren eines sich bewegenden Fahrzeugs, indem ein Bild des Fahrzeugs mittels einer Kamera aufgenommen und daraus Position und perspektivische Ausrichtung des Fahrzeugs ermittelt werden, gerenderte 2D-Ansichten aus in einer Datenbank gespeicherten 3D-Fahrzeugmodellen in Positionen entlang einer erwarteten Bewegungsbahn des Fahrzeugs erzeugt und mit dem aufgenommenen Bild des Fahrzeugs verglichen werden und aus der aufgefundenen 2D-Ansicht mit der größten Übereinstimmung die Klassifizierung des Fahrzeugs durch Zuordnung des zugehörigen 3D-Fahrzeugmodells erfolgt. Die US 2012/020526 A1 offenbart ein Verfahren zum automatischen Prüfen von Reifen eines Lastkraftwagens mit einer einzelnen Kamera, wobei einzelne aufeinanderfolgende Reifenbilder zu einem Bild kombiniert werden.

### Offenbarung der Erfindung

Vor diesem Hintergrund wird mit der vorliegenden Erfindung ein verbessertes Verfahren zur berührungslosen Achsenzählung eines Fahrzeugs auf einer Fahrbahn nach Anspruch 1, eine Achsenzähl-Vorrichtung zur berührungslosen Achsenzählung eines Fahrzeugs auf einer Fahrbahn nach Anspruch 11, ein entsprechendes Achsenzählsystem für den Straßenverkehr nach Anspruch 12 sowie ein entsprechendes Computerprogrammprodukt nach Anspruch 13 vorgestellt. Vorteilhafte Ausgestaltungen ergeben sich aus den jeweiligen Unteransprüchen und der nachfolgenden Beschreibung.

Ein Verkehrsüberwachungssystem dient auch der Durchsetzung von Regeln und Gesetzen im Straßenverkehr. Ein Verkehrsüberwachungssystem kann die Anzahl von Achsen eines vorbeifahrenden Fahrzeugs bestimmen und optional als rollende oder ruhende Achsen zuordnen. Dabei kann unter einer rollenden Achse eine belastete Achse und unter einer ruhenden eine unbelastete oder von der Fahrbahn angehobene Achse verstanden werden. In optionalen Ausbaustufen kann ein Ergebnis durch ein zweites Bild oder eine unabhängige zweite Methode validiert werden.

Fahrzeuge können sich auf einer Fahrbahn bewegen. Die Fahrbahn kann Bestandteil einer Straße sein, sodass eine Mehrzahl von Fahrbahnen parallel angeordnet sein können. Dabei kann unter einem Fahrzeug ein Personenkraftwagen oder ein Nutzfahrzeug wie ein Omnibus oder Lastkraftwagen verstanden werden. Unter einem Fahrzeug kann ein Anhänger verstanden werden. Dabei kann ein Fahrzeug auch einen Anhänger oder Auflieger umfassen. So kann unter einem Fahrzeug ein Kraftfahrzeug oder ein Kraftfahrzeug mit einem Anhänger verstanden werden. Die Fahrzeuge können zumindest zwei Achsen aufweisen. Ein Kraftfahrzeug kann zumindest zwei Achsen aufweisen. Ein Anhänger kann zumindest eine Achse aufweisen. So können Achsen eines Fahrzeugs einem Kraftfahrzeug oder einem dem Kraftfahrzeug zuordenbaren Anhänger zugeordnet werden. Die Fahrzeuge können eine Vielzahl von Achsen aufweisen, wobei ein Teil unbelastet sein kann. Unbelastete Achsen können einen Abstand zur Fahrbahn aufweisen und keine Rotationsbewegung aufweisen. Dabei können Achsen durch Räder gekennzeichnet sein, wobei die Räder des Fahrzeugs auf der Fahrbahn rollen oder unbelastet einen Abstand zur Fahrbahn aufweisen können. So können unter ruhenden Achsen unbelastete Achsen verstanden werden. Unter einem Bilddatenaufnahmesensor kann eine Stereokamera, ein Radarsensor oder eine Monokamera verstanden werden. Eine Stereokamera kann ausgebildet sein, ein Abbild der Umgebung vor der Stereokamera zu schaffen und als Bilddaten bereitzustellen. Unter einer Stereokamera kann eine Stereobildkamera verstanden werden. Eine Monokamera kann ausgebildet sein, ein Abbild der Umgebung vor der Monokamera zu schaffen und als Bilddaten bereitzustellen. Die Bilddaten können auch als Bild oder Bildinformation bezeichnet werden. Die Bilddaten können als ein digitales Signal von der Stereokamera an einer Schnittstelle bereitgestellt werden. Aus den Bilddaten einer Stereokamera kann eine dreidimensionale Rekonstruktion der Umgebung vor der Stereokamera erstellt werden. Die Bilddaten können vorverarbeitet werden, um eine Auswertung zu erleichtern oder zu ermöglichen. So können in den Bilddaten verschiedene Objekte erkannt oder identifiziert werden. Die Objekte können klassifiziert werden. So kann ein Fahrzeug als ein Objekt in den Bilddaten erkannt und klassifiziert werden. So können Räder des Fahrzeugs als ein Objekt oder als ein Teilobjekt eines Objekts erkannt und klassifiziert werden. Dabei können in einem Kamerabild beziehungsweise den Bilddaten Räder des Fahrzeugs gesucht und bestimmt. Aus einer Abbildung eines Rades kann auf eine Achse geschlossen werden. Eine Information über das Objekt kann als Bildinformation oder Objektinformation bereitgestellt werden. So kann die Objektinformation beispielsweise eine Information über eine Position, eine Lage, eine Geschwindigkeit, eine Bewegungsrichtung, eine Objektklassifikation oder Ähnliches umfassen. Eine Objektinformation kann einem Bild beziehungsweise Bilddaten oder aufbereiteten Bilddaten zugeordnet sein.

Im Schritt des Einlesens können die ersten Bilddaten zu einem ersten Zeitpunkt erfasste erste Bilddaten und die zweiten Bilddaten zu einem von dem ersten Zeitpunkt verschiedenen zweiten Zeitpunkt erfasste Bilddaten repräsentieren. Im Schritt des Einlesens können die ersten Bilddaten aus einer ersten Blickrichtung erfasste Bilddaten und die zweiten Bilddaten aus einer zweiten Blickrichtung erfasste Bilddaten repräsentieren. Die ersten Bilddaten und die zweiten Bilddaten können von einer Monokamera oder einer Stereokamera erfasste Bilddaten repräsentieren. So kann zu einem Zeitpunkt ein Bild oder ein Bildpaar erfasst und verarbeitet werden. So können im Schritt des Einlesens erste Bilddaten zu einem ersten Zeitpunkt und zweite Bilddaten zu einem von dem ersten Zeitpunkt verschiedenen zweiten Zeitpunkt eingelesen werden.

Als ein Aspekt der hier vorgestellten Idee können beispielsweise folgende Varianten für den Bilddatenaufnahmesensor und weiterer Sensorik einschließlich der jeweiligen Möglichkeiten der Datenverarbeitung eingesetzt werden. Wenn als Bilddatenaufnahmesensor eine Monokamera verwendet wird, so kann eine Einzelbildaufnahme erfolgen. Dabei können Methoden, die keine 3-D-Information benötigen angewendet werden, das heißt eine reine 2-D-Einzelbildanalyse. Ergänzend kann eine Bildfolge eingelesen und verarbeitet werden. So können Methoden für eine Einzelbildaufnahme verwendet werden, wie weiterhin kann eine Verwendung von 3-D-Methoden möglich sein, die mit unbekannter Skalierung arbeiten können. Ferner kann eine Monokamera mit einer Radarsensorik kombiniert werden. So kann ein Einzelbild einer Monokamera mit einer Entfernungsmessung kombiniert werden. So kann eine 2-D-Bildanalyse mit Zusatzinformation angereichert werden oder validiert werden. Vorteilhaft kann eine Auswertung einer Bildfolge zusammen mit einer Trajektorie des Radars eingesetzt werden. So kann eine 3-D-Analyse mit korrekter Skalierung durchgeführt werden. Bei einer Verwendung einer Stereokamera zur Aufnahme der ersten Bilddaten und der zumindest zweiten Bilddaten kann ein Einzel- (Doppel-) Bild, wie alternativ auch eine (Doppel-) Bildfolge mit Funktionen einer 2/3-D-Analyse ausgewertet werden. Eine Stereokamera als Bildaufnahmesensor kann mit einer Radarsensorik kombiniert werden und Funktionen einer 2D-Analyse oder einer 3D-Analyse auf die Messdaten angewendet werden. In den beschriebenen Ausführungsformen kann eine Radarsensorik oder ein Radar jeweils ersetzt werden durch einen nicht-invasiv entfernungsmessenden Sensor oder eine Kombination nicht-invasiv agierender Geräte, welche diese Aufgabe erfüllen.

Dem Verfahren können vorbereitende Verfahrensschritte vorausgehen. So kann vorbereitend in einem Schritt des Selbstkalibrierens eine Überführung der Sensorik in einen Zustand der Messbereitschaft erfolgen. Dabei kann unter der Sensorik zumindest der Bildaufnahmesensor verstanden werden. Dabei kann unter der Sensorik zumindest die Stereokamera verstanden werden. Dabei kann unter der Sensorik eine Monokamera verstanden werden, deren Ausrichtung zur Straße ermittelt wird. In optionalen Erweiterungen kann unter der Sensorik auch eine andere bildgebende oder entfernungsmessende Sensorik verstanden werden. Weiterhin kann optional in einem Schritt des Initialisierens ein Einrichten der Stereokamera beziehungsweise der Sensorik zur Verkehrsszene erfolgen. Als Ergebnis des Schritts des Initialisierens kann eine Ausrichtung der Sensorik zur Straße bekannt sein.

Im Schritt des Einlesens können weitere Bilddaten zu dem ersten Zeitpunkt und ergänzend oder alternativ dem zweiten Zeitpunkt und ergänzend oder alternativ zu einem von dem ersten Zeitpunkt und ergänzend oder alternativ dem zweiten Zeitpunkt verschiedenen dritten Zeitpunkt eingelesen werden. Dabei können die weiteren Bilddaten eine von einer Stereokamera und ergänzend oder alternativ einer Monokamera und ergänzend oder alternativ einer Radarsensorik erfasste Bildinformation repräsentieren. Eine Monokamera, eine Stereokamera und eine Radarsensorik können zusammenfassend und verallgemeinernd als Sensorik bezeichnet werden. Unter einer Radarsensorik kann ein nicht-invasiv entfernungsmessender Sensor verstanden werden. Im Schritt des Aufbereitens können die Bilddaten und die weiteren Bilddaten aufbereitet werden, um aufbereitete Bilddaten und ergänzend oder alternativ weitere aufbereitete Bilddaten zu erhalten. Im Schritt des Bestimmens kann die Anzahl der Achsen des Fahrzeugs oder die Zuordnung der Achsen zu ruhenden Achsen oder rollenden Achsen des Fahrzeugs unter Verwendung der weiteren aufbereiteten Bilddaten oder der den weiteren aufbereiteten Bilddaten zugeordneten Objektinformation erfolgen. Vorteilhaft können so die weiteren Bilddaten zu einem robusteren Ergebnis führen. Alternativ können die weiteren Bilddaten zum Validieren von Ergebnissen genutzt werden. Eine Verwendung einer Datensequenz, das heißt eine Mehrzahl von Bilddaten, die zu einer Mehrzahl von Zeitpunkten erfasst wurden, kann sinnvoll im Rahmen von einer Selbstkalibrierung, einer Hintergrundschätzung, Stitching und einer Wiederholung von Schritten auf Einzelbildern sein. In diesen Fällen können mehr als zwei Zeitpunkte relevant sein. So können weitere Bilddaten zu zumindest einem dritten Zeitpunkt erfasst werden.

Im Schritt des homografischen Entzerrens können die Bilddaten und ergänzend oder alternativ daraus abgeleitete Bilddaten unter Verwendung der Objektinformation homografisch entzerrt werden und als aufbereitete Bilddaten bereitgestellt werden, sodass eine Seitenansicht des Fahrzeugs in den aufbereiteten Bilddaten homografisch entzerrt ist. Insbesondere kann eine dreidimensionale Rekonstruktion des Objekts, das heißt des Fahrzeugs, genutzt werden, um durch Berechnung einer Homografie eine Ansicht oder Bilddaten bereitzustellen, wie sie bei einer orthogonalen Sicht auf eine Fahrzeugseite beziehungsweise Abbildung des Fahrzeugs als Bilddaten bereitstehen würde. Vorteilhaft können Räder der Achsen kreisrund dargestellt werden und rollenden Achsen in ein und derselben Höhe den homografisch aufbereiteten Bilddaten wiedergegeben werden. Ruhende Achsen können eine davon abweichende Höhe aufweisen.

Ferner fasst der Schritt des Aufbereitens einen Schritt des Stitching um. Beispielsweise kann sich eine Abbildung eines Fahrzeugs über eine Mehrzahl von Bildern erstrecken. Dabei können sich überlappende Bildbereiche identifiziert und überlagert werden. Ähnliche Funktionen können aus der Panoramafotografie bekannt sein. Vorteilhaft kann auch bei einem geringeren Abstand der Erfassungseinrichtung wie beispielsweise einer Stereokamera zu dem abgebildeten Fahrzeug und bei längeren Fahrzeugen ein Bild erstellt werden, auf dem das Fahrzeug komplett abgebildet ist. Vorteilhaft kann dadurch ein Abstand zwischen der Fahrbahn und der Stereokamera geringer ausfallen, als ohne den Einsatz von Stitching oder ein Bild verzerrenden Weitwinkelobjektiven. Vorteilhaft kann aus den zusammengefügten Bilddaten eine Gesamtansicht des Fahrzeuges generiert werden, welche gegenüber einer Einzelansicht eine konstant hohe lokale Pixelauflösung von Bilddetails bietet.

Der Schritt des Aufbereitens kann einen Schritt des Fittings von Primitiva in den ersten Bilddaten und ergänzend oder alternativ in den zweiten Bilddaten und ergänzend oder alternativ daraus abgeleiteten ersten Bilddaten und ergänzend oder alternativ daraus abgeleiteten zweiten Bilddaten umfassen, um ein Ergebnis der gefitteten und ergänzend oder alternativ eingepassten Primitiva als Objektinformation bereitzustellen. Unter Primitiva können insbesondere Kreise, Ellipsen oder Segmente von Kreisen oder Ellipsen verstanden werden. Dabei kann als Objektinformation ein Gütemaß für eine Anpassung eines Primitivums an eine Radkontur bestimmt werden. Ein Kreisfitting in einer transformierten Seitenansicht, das heißt aufbereiteten Bilddaten beispielsweise durch einen Schritt des homografischen Entzerrens, kann durch ein Ellipsenfitting im Originalbild, das heißt den Bilddaten, an korrespondierender Stelle abgesichert werden. Eine Häufung von Mittelpunktschätzungen der Primitiva kann eine erhöhte Wahrscheinlichkeit eines Radmittelpunktes und somit einer Achse anzeigen.

Günstig ist es auch, wenn der Schritt des Aufbereitens einen Schritt des Erkennens von Radialsymmetrien in den ersten Bilddaten und ergänzend oder alternativ in den zweiten Bilddaten und ergänzend oder alternativ daraus abgeleiteten ersten Bilddaten und ergänzend oder alternativ daraus abgeleiteten zweiten Bilddaten umfasst, um ein Ergebnis der erkannten Radialsymmetrien als Objektinformation bereitzustellen. Dabei kann der Schritt des Erkennens von Radialsymmetrien eine Mustererkennung mittels Akkumulationsmethoden umfassen. Beispielsweise können für Kandidaten von Zentren der Symmetrien Transformationen in Polarkoordinaten durchgeführt werden, wobei in der Polardarstellung sich Translationssymmetrien ergeben können. Dabei können Translationssymmetrien mittels Verschiebungsdetektion erkannt werden. Bewertete Kandidaten für Mittelpunkte von Radialsymmetrien, die auf Achsen hinweisen, können als Objektinformation bereitgestellt werden.

Ferner kann der Schritt des Aufbereitens einen Schritt des Klassifizierens von einer Mehrzahl von Bildbereichen unter Verwendung zumindest eines Klassifikators in den ersten Bilddaten und ergänzend oder alternativ in den zweiten Bilddaten und ergänzend oder alternativ daraus abgeleiteten ersten Bilddaten und ergänzend oder alternativ daraus abgeleiteten zweiten Bilddaten umfassen, um ein Ergebnis der klassifizierten Bildbereiche als Objektinformation bereitzustellen. Ein Klassifikator kann vorab trainiert werden. So können mit Referenzdatensätzen die Parameter des Klassifikators bestimmt werden. Einem Bildbereich oder einer Region in den Bilddaten kann unter Verwendung des Klassifikators ein Wahrscheinlichkeitswert zugeordnet werden, der eine Wahrscheinlichkeit für ein Rad beziehungsweise eine Achse repräsentiert.

Im Schritt des Aufbereitens kann eine Hintergrundschätzung mit statistischen Methoden erfolgen. Dabei kann ein statischer Hintergrund in den Bilddaten mit statistischen Methoden erkannt werden dabei kann eine Wahrscheinlichkeit für einen statischen Bildhintergrund bestimmt werden. Bildbereiche, die an ein Fahrzeug angrenzen, können einer Straßenoberfläche oder Fahrbahn zugeordnet werden. Dabei kann eine Information über den statischen Bildhintergrund auch in eine andere Ansicht, beispielsweise Seitenansicht, transformiert werden.

Der Schritt des Aufbereitens kann einen Schritt des Ermittelns von Aufstandspunkten auf der Fahrbahn unter Verwendung der ersten Bilddaten und ergänzend oder alternativ der zweiten Bilddaten und ergänzend oder alternativ daraus abgeleiteten ersten Bilddaten und ergänzend oder alternativ daraus abgeleiteten zweiten Bilddaten umfassen, um Aufstandspunkte des Fahrzeugs auf der Fahrbahn als Objektinformation bereitzustellen. Wenn einer Achse ein Aufstandspunkt zugeordnet ist, so kann es sich um eine rollende Achse handeln. Dabei kann eine 3D-Rekonstruktion des Fahrzeugs aus den Bilddaten der Stereokamera genutzt werden. Positionen, an denen ein Fahrzeug, oder ein Objekt, die Fahrbahn in dem dreidimensionalen Modell berührt oder sich in einem vorbestimmten Toleranzbereich befindet, weisen eine hohe Wahrscheinlichkeit für eine Achse, insbesondere eine rollende Achse, auf.

Der Schritt des Aufbereitens kann einen Schritt des modellbasierten Erkennens von Rädern und/oder Achsen unter Verwendung der ersten Bilddaten und ergänzend oder alternativ der zweiten Bilddaten und ergänzend oder alternativ daraus abgeleiteten ersten Bilddaten und ergänzend oder alternativ daraus abgeleiteten zweiten Bilddaten umfassen, um erkannte Radkonturen und/oder Achsen des Fahrzeugs als Objektinformation bereitzustellen. Aus den Bilddaten der Stereokamera kann ein dreidimensionales Modell eines Fahrzeuges erzeugt werden. Aus dem dreidimensionalen Modell des Fahrzeugs keinen Radkonturen und somit Achsen bestimmt werden. So kann aus einer 3D-Rekonstruktion die Anzahl des Fahrzeugs bestimmt werden.

Günstig ist es auch, wenn der Schritt des Aufbereitens einen Schritt des Projizierens aus den Bilddaten der Stereokamera in einem Bild einer Seitenansicht des Fahrzeugs umfasst. So können aus einem dreidimensionalen Modell bestimmte Objektinformationen in eine transformierte Seitenansicht zur Erkennung von Achsen genutzt werden. So kann das dreidimensionale Modell beispielsweise einem Schritt des homografischen Entzerrens unterzogen werden.

Ferner kann der Schritt des Aufbereitens einen Schritt des Bestimmens von Selbstähnlichkeiten unter Verwendung der ersten Bilddaten und ergänzend oder alternativ der zweiten Bilddaten und ergänzend oder alternativ daraus abgeleiteten ersten Bilddaten und ergänzend oder alternativ daraus abgeleiteten zweiten Bilddaten und ergänzend oder alternativ der Objektinformation umfassen, um über Selbstähnlichkeiten bestimmte Radpositionen des Fahrzeugs als Objektinformation bereitzustellen. Eine Abbildung einer Achse oder eines Rades eines Fahrzeugs in einer Seitenansicht kann ähnlich zu einer Abbildung einer weiteren Achse des Fahrzeugs in der Seitenansicht sein. Dabei können unter Verwendung einer Autokorrelation Selbstähnlichkeiten bestimmt werden. Spitzen (Peaks) in einem Ergebnis der Autokorrelationsfunktion können Ähnlichkeiten von Bildinhalten in den Bilddaten aufzeigen. Eine Anzahl und ein Abstand der Spitzen können einen Hinweis auf Achsenpositionen aufzeigen.

Der Schritt des Aufbereitens fasst einen Schritt des Analysierens von Bewegungsunschärfen unter Verwendung der ersten Bilddaten und ergänzend oder alternativ der zweiten Bilddaten und ergänzend oder alternativ daraus abgeleiteten ersten Bilddaten und ergänzend oder alternativ daraus abgeleiteten zweiten Bilddaten und ergänzend oder alternativ der Objektinformation um, um dargestellte Achsen zu ruhenden Achsen des Fahrzeugs und ergänzend oder alternativ rollenden Achsen des Fahrzeugs zuzuordnen und als Objektinformation bereitzustellen. Rollende oder genutzte Achsen können eine bestimmte Bewegungsunschärfe wegen einer Radrotation aufweisen. Aus einer bestimmten Bewegungsunschärfe kann eine Information über eine rollende Achse gewonnen werden. Ruhende Achsen können am Fahrzeug hochgesetzt sein, sodass die zugehörigen Räder nicht genutzt werden. Kandidaten für genutzte oder rollende Achsen können sich durch Bewegungsunschärfe wegen Radrotation auszeichnen. Neben den unterschiedlichen Höhenlagen ruhender und bewegter Räder oder Achsen in den Bilddaten können die unterschiedlichen Bewegungsunschärfen Merkmale zur Erkennung ruhender und bewegter Achsen markieren. Für Bildbereiche, in denen ein Rad abgebildet ist, kann die Abbildungsschärfe durch Summierung der Beträge der zweiten Ableitungen im Bild abgeschätzt werden. Räder an bewegten Achsen können durch die Rotationsbewegung eine weniger scharfe Abbildung als Räder an ruhenden Achsen bieten. Weiterhin kann die Bewegungsunschärfe aktiv gesteuert und bemessen werden. Dazu können entsprechend hohe Belichtungszeiten genutzt werden. Die resultierenden Bilder können geradlinige Bewegungsverläufe entlang der Fahrtrichtung bei ruhenden Achsen und radiale Verläufe an bewegten Achsen zeigen.

Von Vorteil ist ferner eine Ausführungsform des hier vorgestellten Ansatzes, bei dem im Schritt des Einlesens erste und zweite Bilddaten eingelesen werden, die Bilddaten repräsentieren, die von einer seitlich von der Fahrbahn angeordneten Bilddatenaufnahmesensors aufgenommen wurden. Eine solche Ausführungsform des hier vorgestellten Ansatzes bietet den Vorteil, eine sehr präzise arbeitende berührungslose Achsenzählung des Fahrzeugs vornehmen zu können, da durch die definierte Blickrichtung von seitlich der Fahrbahn auf ein eine Achszähleinheit passierendes Fahrzeug eine Falsch-Erkennung und Falschinterpretation von Objekten im Randbereich des vom Bilddatenaufnahmesensor überwachten Bereichs weitgehend minimiert, vermieden oder ganz unterdrückt werden kann.

Ferner können in einer weiteren Ausführungsform des hier vorgestellten Ansatzes im Schritt des Einlesens erste und zweite Bilddaten eingelesen werden, die unter Verwendung einer Blitzeinheit zur Verbesserung der Ausleuchtung eines Erfassungsbereichs des Bilddatenaufnahmesensors aufgenommen wurden. Eine solche Blitzeinheit kann eine optische Einheit sein, die ausgebildet ist, um Licht, beispielsweise im sichtbaren oder im infraroten Spektralbereich in einen von einem Bilddatenaufnahmesensor überwachten Bereich auszusenden, um ein schärferes oder helleres Abbild des diesen Bereich passierenden Fahrzeugs zu erhalten. Auf diese Weise kann vorteilhaft eine Verbesserung der Achsenerkennung bei der Auswertung der ersten und zweiten Bilddaten erreicht werden, wodurch eine Effizienz des hier vorgestellten Verfahrens erhöht werden kann.

Denkbar ist ferner eine Ausführungsform des hier vorgestellten Ansatzes, bei der im Schritt des Einlesens ferner Fahrzeugdaten des den Bilddatenaufnahmesensor passierenden Fahrzeugs eingelesen werden, wobei im Schritt des Bestimmens die Anzahl der Achsen unter Verwendung der eingelesenen Fahrzeugdaten bestimmt werden. Unter solchen Fahrzeugdaten kann beispielsweise einer oder mehrere der folgenden Parameter verstanden werden: Geschwindigkeit des Fahrzeugs relativ zum Bilddatenaufnahmesensor, Abstand / Position des Fahrzeugs zum Bilddatenaufnahmesensor, Größe / Länge des Fahrzeugs, oder dergleichen. Eine solche Ausführungsform des hier vorgestellten Verfahrens bietet den Vorteil, bei einem geringen Zusatzaufwand für die Ermittlung der Fahrzeugdaten, die bereits durch einfache und breit verfügbare Sensoren bereitgestellt werden können, eine deutliche Präzisierung und Beschleunigung der berührungslosen Achsenzählung realisieren vornehmen zu können.

Eine Achsenzähl-Vorrichtung zur berührungslosen Achsenzählung eines Fahrzeugs auf einer Fahrbahn umfasst zumindest die folgenden Merkmale:
eine Schnittstelle zum Einlesen von ersten Bilddaten zu einem ersten Zeitpunkt und Einlesen von zweiten Bilddaten zu einem von dem ersten Zeitpunkt verschieden zweiten Zeitpunkt, wobei die ersten Bilddaten und ergänzend oder alternativ die zweiten Bilddaten an einer Schnittstelle bereitgestellte Bilddaten einer seitlich von der Fahrbahn angeordneten Stereokamera repräsentieren, wobei die ersten Bilddaten und ergänzend oder alternativ die zweiten Bilddaten ein Abbild des Fahrzeugs umfassen;
eine Einrichtung zum Aufbereiten der ersten Bilddaten und ergänzend oder alternativ zweiten Bilddaten, um aufbereitete erste Bilddaten und ergänzend oder alternativ aufbereitete zweite Bilddaten zu erhalten, wobei unter Verwendung der ersten Bilddaten und ergänzend oder alternativ der zweiten Bilddaten in einer Einrichtung des Detektierens zumindest ein Objekt in den ersten Bilddaten und ergänzend oder alternativ den zweiten Bilddaten detektiert wird und wobei als eine zu den ersten Bilddaten und ergänzend oder alternativ zweiten Bilddaten zugeordnete das Objekt repräsentierende Objektinformation bereitgestellt wird und wobei in einer Einrichtung des Verfolgens das zumindest eine Objekt unter Verwendung der Objektinformation in den Bilddaten über die Zeit verfolgt wird sowie wobei in einer Einrichtung des Klassifizierens das zumindest eine Objekt unter Verwendung der Objektinformation identifiziert und ergänzend oder alternativ klassifiziert wird; und
eine Einrichtung zum Bestimmen einer Anzahl von Achsen des Fahrzeugs und ergänzend oder alternativ einer Zuordnung der Achsen zu ruhenden Achsen des Fahrzeugs und rollenden Achsen des Fahrzeugs unter Verwendung der aufbereiteten ersten Bilddaten und ergänzend oder alternativ der aufbereiteten zweiten Bilddaten und ergänzend oder alternativ der den aufbereiteten Bilddaten zugeordneten Objektinformation, um die Achsen des Fahrzeugs berührungslos zu zählen.

Die Achsenzähl-Vorrichtung ist ausgebildet, um die Schritte einer Variante eines hier vorgestellten Verfahrens in entsprechenden Einrichtungen durchzuführen beziehungsweise umzusetzen. Auch durch diese Ausführungsvariante der Erfindung in Form einer Vorrichtung kann die der Erfindung zugrunde liegende Aufgabe schnell und effizient gelöst werden. Die Einrichtung des Detektierens, die Einrichtung des Verfolgens und die Einrichtung des Klassifizierens können dabei Teileinrichtungen der Einrichtung zum Aufbereiten sein.

Unter einer Achsenzähl-Vorrichtung kann vorliegend ein elektrisches Gerät verstanden werden, das Sensorsignale verarbeitet und in Abhängigkeit davon Steuer- und/oder Datensignale ausgibt. Die Achsenzähl-Vorrichtung, auch einfach nur als Vorrichtung bezeichnet, kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird Achsenzählsystem für den Straßenverkehr vorgestellt, das zumindest eine Stereokamera und eine Variante einer hier beschriebenen Achsenzähl-Vorrichtung umfasst, um Achsen eines Fahrzeugs auf einer Fahrbahn berührungslos zu zählen. Die Sensorik des Achsenzählsystems kann an einem Mast oder in einem Turm neben der Fahrbahn angeordnet beziehungsweise montiert sein.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:
Fig. 1 eine Darstellung eines Achsenzählsystems gemäß einem Ausführungsbeispiel der vorliegenden Erfindung;
Fig. 2 ein Blockschaltbild eine Achsenzähl-Vorrichtung zur berührungslosen Achsenzählung eines Fahrzeugs auf einer Fahrbahn gemäß einem Ausführungsbeispiel der vorliegenden Erfindung;
Fig. 3 ein Ablaufdiagramm eines Verfahrens gemäß einem Ausführungsbeispiel der vorliegenden Erfindung;
Fig. 4 ein Ablaufdiagramm eines Verfahrens gemäß einem Ausführungsbeispiel der vorliegenden Erfindung;
Fig. 5 eine schematische Darstellung eines Achsenzählsystems gemäß einem Ausführungsbeispiel der vorliegenden Erfindung;
Fig. 6 eine Konzeptdarstellung einer Klassifikation gemäß einem Ausführungsbeispiel der vorliegenden Erfindung;
Fig. 7 bis Fig. 9 eine fotografische Seitenansicht und Darstellung erkannter Achsen gemäß einem Ausführungsbeispiel der vorliegenden Erfindung;
Fig. 10 eine Konzeptdarstellung eines Fittings von Primitiva gemäß einem Ausführungsbeispiel der vorliegenden Erfindung;
Fig. 11 eine Konzeptdarstellung eines Erkennens von Radialsymmetrien gemäß einem Ausführungsbeispiel der vorliegenden Erfindung;
Fig. 12 eine Konzeptdarstellung einer Stereobildverarbeitung gemäß einem Ausführungsbeispiel der vorliegenden Erfindung;
Fig. 13 vereinfachte Darstellung von aufbereiteten Bilddaten mit einer Kennzeichnung fahrbahnnaher Objekte gemäß einem Ausführungsbeispiel der vorliegenden Erfindung
Fig. 14 eine Darstellung einer Anordnung eines Achszählystems mit einem Bildaufnahmesensor neben einer Fahrbahn;
Fig. 15 eine Darstellung eines Stitchings, in dem von einem Bilddatenaufnahmesensor aufgenommene Bildsegmente des Fahrzeugs zu einem Gesamtbild zusammengesetzt wurden; und
Fig. 16 ein Abbild eines Fahrzeugs, das aus einem Bild generiert wurde, welches durch ein Stitching von unterschiedlichen von einem Bilddatenaufnahmesensor aufgenommenen Bildsegmenten generiert wurde.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

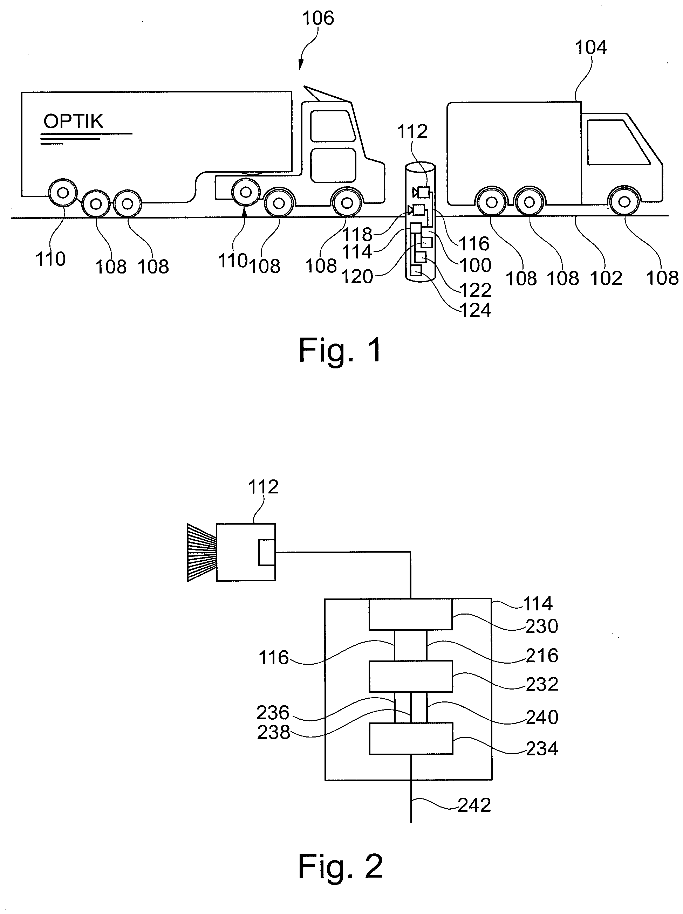

Fig. 1 zeigt eine Darstellung ein Achsenzählsystem 100 gemäß einem Ausführungsbeispiel der vorliegenden Erfindung. Das Achsenzählsystem 100 ist neben einer Fahrbahn 102 angeordnet. Auf der Fahrbahn 102 sind zwei Fahrzeuge 104, 106 dargestellt. Dabei handelt es sich in dem gezeigten Ausführungsbeispiel um Nutzfahrzeuge 104, 106 beziehungsweise Lastkraftwagen 104, 106. Eine Fahrtrichtung der beiden Fahrzeuge 104, 106 weist in der Darstellung in Fig. 1 von links nach rechts. Bei dem somit vorderen Fahrzeug 104 handelt es sich um einen Lastkraftwagen 104 mit Kastenaufbau. Bei dem hinteren Fahrzeug 106 handelt es sich um einen Sattelschlepper mit einem Auflieger.

Das Fahrzeug 104, das heißt der Lastkraftwagen mit Kastenaufbau, weist drei Achsen 108 auf. Bei den drei Achsen 108 handelt es sich um rollende oder belastete Achse 108. Das Fahrzeug 106, das heißt der Sattelschlepper mit Auflieger, weist insgesamt sechs Achsen 108, 110 auf. Dabei weist der Sattelschlepper drei Achsen 108, 110 und der Auflieger drei Achsen 108, 110 auf. Von den drei Achsen 108, 110 des Sattelschleppers und den drei Achsen 108, 110 des Aufliegers sind jeweils zwei Achsen 108 in Kontakt mit der Fahrbahn und jeweils eine Achse 110 oberhalb von der Fahrbahn angeordnet. So handelt es sich bei den Achsen 108 jeweils um rollende oder belastete Achsen 108 und bei den Achsen 110 ruhende oder unbelastete Achsen 110.

Das Achsenzählsystem 100 umfasst zumindest einen Bilddatenaufnahmesensor sowie eine Achsenzähl-Vorrichtung 114 zur berührungslosen Achsenzählung eines Fahrzeugs 104, 106 auf der Fahrbahn 102. In dem in Fig. 1 gezeigten Ausführungsbeispiel ist der Bilddatenaufnahmesensor als eine Stereokamera 112 ausgeführt. Die Stereokamera 112 ist ausgebildet, ein Abbild in Blickrichtung vor der Stereokamera 112 zu erfassen und als Bilddaten 116 an einer Schnittstelle bereitzustellen. Die Achsenzähl-Vorrichtung 114 ist ausgebildet, die von der Stereokamera 112 bereitgestellten Bilddaten 116 zu empfangen und auszuwerten, um eine Anzahl der Achsen 108, 110 der Fahrzeuge 104, 106 zu bestimmen. In einem besonders günstigen Ausführungsbeispiel ist die Achsenzähl-Vorrichtung 114 ausgebildet, die Achsen 108, 110 eines Fahrzeugs 104, 106 nach rollenden Achsen 108 und ruhenden Achsen 110 zu unterscheiden. Die Anzahl der Achsen 108, 110 wird anhand der Zahl der beobachteten Räder bestimmt.

Optional umfasst das Achsenzählsystem 100 wie in Fig. 1 dargestellt zumindest eine weitere Sensorik 118. Bei der weiteren Sensorik 118 handelt es sich je nach Ausführungsbeispiel um eine weitere Stereokamera 118, eine Monokamera 118 oder eine Radarsensorik 118. In optionalen Erweiterungen und hier nicht dargestellten Ausführungsbeispielen kann das Achsenzählsystem 100 eine Mehrzahl von gleichen oder voneinander verschiedenen Sensoriken 118 umfassen. In einem nicht gezeigten Ausführungsbeispiel handelt es sich bei dem Bilddatenaufnahmesensor um eine Monokamera, wie diese hier als weitere Sensorik 118 in Fig. 1 dargestellt ist. So kann der Bilddatenaufnahmesensor in Varianten des dargestellten Ausführungsbeispiels als Stereokamera 112 oder als Monokamera 118 ausgeführt sein.

In einer Variante des hier beschriebenen Achsenzählsystems 100 umfasst das Achsenzählsystem 100 weiterhin eine Einrichtung 120 zur temporären Speicherung von Daten sowie eine Einrichtung 122 zur Fernübertragung von Daten. Optional umfasst das System 100 weiterhin eine unterbrechungsfreie Spannungsversorgung 124.

In einem nicht dargestellten Ausführungsbeispiel ist das Achsenzählsystem 100 im Unterschied zu dem hier dargestellten Ausführungsbeispiel in einer Säule oder an einem Mast an einer Verkehrsleitbrücke oder Schilderbrücke oberhalb der Fahrbahn 102 beziehungsweise seitlich oberhalb der Fahrbahn 102 montiert.

Ein Ausführungsbeispiel eines hier beschriebenen kann in Verbindung mit einem System zum Erfassen einer Gebührenpflicht für die Nutzung von Verkehrswegen eingesetzt werden. Vorteilhaft kann ein Fahrzeug 104, 106 mit einer geringen Latenz bestimmt werden, während das Fahrzeug 104, 106 an einem Installationsort des Achsenzählsystems 100 vorüberfährt.

Eine Mastinstallation des Achsenzählsystems 100 umfasst in einem Ausführungsbeispiel wie in Fig. 1 dargestellt Komponenten zur Datenerfassung und Datenverarbeitung, zur mindestens temporären Speicherung und Fernübertragung von Daten sowie zur unterbrechungsfreien Spannungsversorgung. Als Sensorik kann eine kalibrierte oder sich selbst kalibrierende Stereokamera 112 zum Einsatz kommen. Optional wird ein Radarsensor 118 genutzt. Weiterhin ist der Einsatz einer Monokamera mit einem weiteren tiefenmessenden Sensor möglich.

Fig. 2 zeigt ein Blockschaltbild eine Achsenzähl-Vorrichtung 114 zur berührungslosen Achsenzählung eines Fahrzeugs auf einer Fahrbahn gemäß einem Ausführungsbeispiel der vorliegenden Erfindung. Bei der Achsenzähl-Vorrichtung 114 kann es sich um die in Fig. 1 gezeigte Achsenzähl-Vorrichtung 114 handeln. So kann es sich bei dem Fahrzeug ebenfalls um ein Ausführungsbeispiel eines in Fig. 1 gezeigten Fahrzeugs 104, 106 handeln. Die Achsenzähl-Vorrichtung 114 weist zumindest eine Schnittstelle 230 zum Einlesen, eine Einrichtung 232 zum Aufbereiten sowie eine Einrichtung 234 zum Bestimmen auf.

Die Schnittstelle 230 zum Einlesen ist ausgebildet zumindest erste Bilddaten 116 zu einem ersten Zeitpunkt t1 sowie zweite Bilddaten 216 zu einem zweiten Zeitpunkt t2 einzulesen. Dabei handelt es sich bei dem ersten Zeitpunkt t1 und dem zweiten Zeitpunkt t2 um zwei voneinander verschiedene Zeitpunkte t1, t2. Die Bilddaten 116, 216 repräsentieren an einer Schnittstelle einer Stereokamera 112 bereitgestellte Bilddaten, die ein Abbild eines Fahrzeugs auf einer Fahrbahn umfassen. Dabei ist in den Bilddaten zumindest ein Abbild eines Teilbereichs des Fahrzeugs dargestellt beziehungsweise repräsentiert. Wie nachfolgend beschrieben können zumindest zwei Bilder beziehungsweise Bilddaten 116, die jeweils einen Teilbereich des Fahrzeugs abbilden zu weiteren Bilddaten 116 zusammengefügt werden, um ein vollständiges Abbild aus einer Blickrichtung des Fahrzeugs zu erhalten.

Die Einrichtung 232 zum Aufbereiten ist ausgebildet, unter Verwendung der ersten Bilddaten 116 und der zweiten Bilddaten 216 aufbereitete erste Bilddaten 236 sowie aufbereitete zweite Bilddaten 238 bereitzustellen. Hierzu umfasst die Einrichtung 232 zum Aufbereiten zumindest eine Einrichtung des Detektierens, eine Einrichtung des Verfolgens sowie eine Einrichtung des Klassifizierens. In der Einrichtung des Detektierens wird zumindest ein Objekt in den ersten Bilddaten 116 sowie den zweiten Bilddaten 216 detektiert und als eine den jeweiligen Bilddaten zugeordnete das Objekt repräsentierende Objektinformation 240 bereitgestellt. Dabei umfasst die Objektinformation 240 je nach Ausführungsbeispiel beispielsweise eine Größe, eine Lage oder eine Position des erkannten Objekts. Die Einrichtung des Verfolgens ist ausgebildet das zumindest eine Objekt unter Verwendung der Objektinformation 240 in den Bilddaten 116, 216 über die Zeit zu verfolgen. So ist die Einrichtung des Verfolgens weiterhin ausgebildet, eine Position oder eine Lage des Objekts zu einer zukünftigen Zeit zu prognostizieren. Die Einrichtung des Klassifizierens ist ausgebildet, das zumindest eine Objekt unter Verwendung der Objektinformation 240 zu identifizieren, das heißt beispielsweise, die Fahrzeuge nach Fahrzeugen mit einem Kastenaufbau und Sattelschlepper mit einem Auflieger zu unterscheiden. Dabei kann die Anzahl der möglichen Fahrzeugklassen quasi beliebig gewählt werden. Die Einrichtung 234 zum Bestimmen ist ausgebildet, eine Anzahl von Achsen des abgebildeten Fahrzeugs beziehungsweise eine Zuordnung der Achsen zu ruhenden Achsen und rollenden Achsen unter Verwendung der aufbereiteten ersten Bilddaten 236, der aufbereiteten zweiten Bilddaten 238 sowie der den Bilddaten 236, 238 zugeordneten Objektinformationen 240 zu bestimmen. Weiterhin ist die Einrichtung 234 zum Bestimmen ausgebildet, ein Ergebnis 242 an einer Schnittstelle bereitzustellen.

In einem Ausführungsbeispiel ist die Vorrichtung 114 ausgebildet, eine dreidimensionale Rekonstruktion des Fahrzeugs zu erstellen und für eine weitere Verarbeitung bereitzustellen.

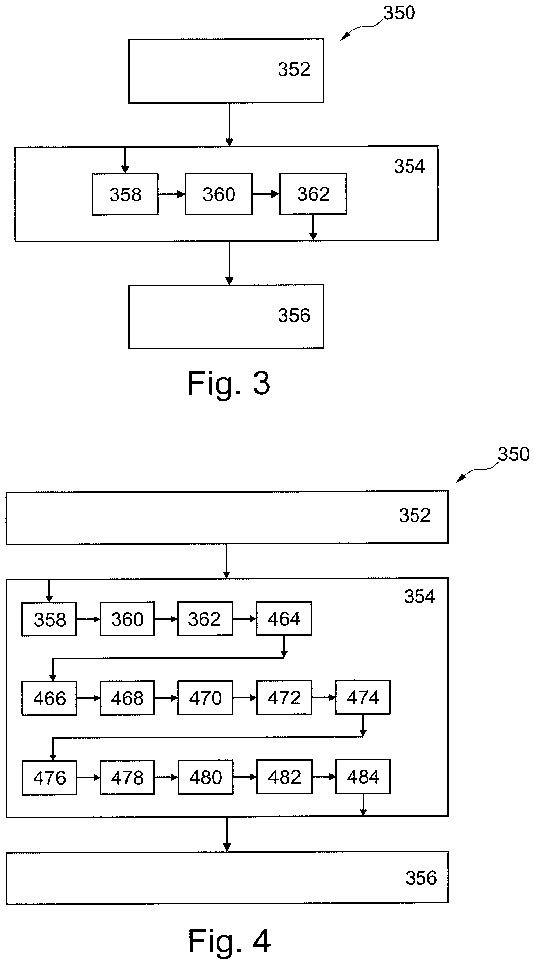

Fig. 3 zeigt ein Ablaufdiagramm eines Verfahrens 350 gemäß einem Ausführungsbeispiel der vorliegenden Erfindung. Das Verfahren 350 zur berührungslosen Achsenzählung eines Fahrzeugs auf einer Fahrbahn umfasst zumindest drei Schritte, einen Schritt 352 des Einlesens, einen Schritt 354 des Aufbereitens sowie einen Schritt 356 des Bestimmens. Im Schritt 352 des Einlesens werden erste Bilddaten zu einem ersten Zeitpunkt und zweite Bilddaten zu einem zweiten Zeitpunkt eingelesen. In einem alternativen Ausführungsbeispiel werden die ersten Bilddaten und die zweiten Bilddaten parallel eingelesen. Dabei repräsentieren die ersten Bilddaten ein von einer Stereokamera zu einem ersten Zeitpunkt und die zweiten Bilddaten zu einem zu dem ersten Zeitpunkt verschiedenen zweiten Zeitpunkt erfassten Bilddaten. Dabei umfassen die Bilddaten zumindest eine Information über ein Abbild eines Fahrzeugs auf einer Fahrbahn. In einem Ausführungsbeispiel ist zumindest ein Teilbereich des Fahrzeugs abgebildet. Im Schritt 354 des Aufbereitens werden unter Verwendung der ersten Bilddaten und der zweiten Bilddaten aufbereitete erste Bilddaten, aufbereitete zweite Bilddaten sowie den Bilddaten zugeordnete Objektinformationen aufbereitet. Im Schritt 356 des Bestimmens wird eine Anzahl der Achsen des Fahrzeugs unter Verwendung der aufbereiteten ersten Bilddaten, der aufbereiteten zweiten Bilddaten sowie der den aufbereiteten Bilddaten zugeordneten Objektinformation bestimmt. In einem günstigen Ausführungsbeispiel werden zusätzlich zur Gesamtanzahl der Achsen des Fahrzeugs im Schritt 356 des Bestimmens diese zusätzlich nach ruhenden Achsen und rollenden Achsen unterschieden oder die Gesamtanzahl diesen zugeordnet.

Der Schritt 354 des Aufbereitens umfasst zumindest drei Teilschritte 358, 360, 362. In dem Teilschritt 358 des Detektierens wird zumindest ein Objekt in den ersten Bilddaten und den zweiten Bilddaten detektiert und eine zu den ersten Bilddaten und den zweiten Bilddaten zugeordnete das Objekt repräsentierende Objektinformation bereitgestellt. In dem Teilschritt 360 des Verfolgens wird das im Teilschritt 358 detektierte zumindest eine Objekt unter Verwendung der Objektinformation in den Bilddaten über die Zeit verfolgt. In dem auf den Teilschritt 360 des Verfolgens folgenden Teilschritt 362 des Klassifizierens wird das zumindest eine Objekt unter Verwendung der Objektinformation klassifiziert.

Fig. 4 zeigt ein Ablaufdiagramm eines Verfahrens 350 gemäß einem Ausführungsbeispiel der vorliegenden Erfindung. Bei dem Verfahren 350 zur berührungslosen Achsenzählung eines Fahrzeugs auf einer Fahrbahn kann es sich um ein Ausführungsbeispiel des in Fig. 3 gezeigten Verfahren 350 zur berührungslosen Achsenzählung eines Fahrzeugs auf einer Fahrbahn handeln. Das Verfahren umfasst zumindest einen Schritt 352 des Einlesens, einen Schritt 354 des Aufbereitens sowie einen Schritt 356 des Bestimmens.

Der Schritt 354 des Aufbereitens umfasst zumindest die in Fig. 3 beschriebenen Teilschritte 358 des Detektierens, 360 des Verfolgens sowie 362 des Klassifizierens. Optional weist das Verfahren 350 im Schritt 354 des Aufbereitens weitere Teilschritte auf. Die im Folgenden beschriebenen optionalen Teilschritte des Schritts 354 des Aufbereitens können in Ausführungsbeispielen sowohl in der Reihenfolge verändert werden, als auch in nicht gezeigten Ausführungsbeispielen nur ein Teil der optionalen Schritte ausgeführt werden.

Die Achsenzählung und Differenzierung nach ruhenden und rollenden Achsen erfolgt in optionalen Ausführungsbeispielen vorteilhaft durch eine Auswahl und Kombination folgender Schritte. Dabei stellen die optionalen Teilschritte ein Ergebnis als Ergänzung der Objektinformation und ergänzend oder alternativ als aufbereitete Bilddaten bereit. Die Objektinformation kann somit von jedem Teilschritt erweitert werden. In einem Ausführungsbeispiel umfasst die Objektinformation nach einem Durchlaufen der Verfahrensschritte eine Information über das Fahrzeug mit der Anzahl der Achsen und einer Zuordnung zu ruhenden Achsen und rollenden Achsen. So kann im Schritt 356 des Bestimmens eine Anzahl der Achsen und optional ergänzend eine Zuordnung der Achsen zu rollenden Achsen und ruhenden Achsen unter Verwendung der Objektinformation bestimmt werden.

In einem optionalen Teilschritt 464 des homografischen Entzerrens des Schritts 354 des Aufbereitens erfolgt eine homografische Entzerrung der Seitenansicht eines Fahrzeuges. Dabei wird aus der 3D-Rekonstruktion über den zeitlichen Verlauf der Fahrzeugbewegung die Trajektorie des das Fahrzeug umschreibenden Quaders oder des als Fahrzeug detektierten Objekts umschreibenden Quaders ermittelt. Damit sind nach einer Initialisierung zu jedem Zeitpunkt die Rotationslage des Fahrzeugs zum Messgerät und die Fahrtrichtung bekannt. Mit bekannter Rotationslage lässt sich durch Berechnung einer Homografie eine Ansicht erzeugen, wie sie bei orthogonaler Sicht auf die Seite des Fahrzeuges entstehen würde, wobei diese Aussage auf einen planaren Bereich eingeschränkt ist. Als Ergebnis werden Reifenkonturen annähernd kreisrund dargestellt und die benutzten Räder befinden sich in derselben Höhenlage im transformierten Bild. Dabei können unter einem transformierten Bild aufbereitete Bilddaten verstanden werden.

Optional umfasst der Schritt 354 des Aufbereitens einen optionalen Teilschritt 466 des Stitching von Bildaufnahmen im Nahbereich. Mit steigender Entfernung vom Messsystem und damit von den Kameras wie beispielsweise der Stereokamera fällt die örtliche Bildauflösung ab. Für eine annähernd konstante Auflösung eines Fahrzeugs wie beispielsweise einer langen Zugmaschine werden mehrere Bildaufnahmen kombiniert, in denen verschiedene Abschnitte eines langen Fahrzeuges jeweils nahe bei der Kamera sind. Die Kombination der überlappenden Teilbilder kann durch die bekannte Geschwindigkeit des Fahrzeuges gut initialisiert werden. Anschließend wird mit lokalen Bildvergleichen im Überlappungsbereich das Ergebnis des Zusammenfügens optimiert. Am Ende stehen aufbereitete Bilddaten oder eine Bildaufnahme einer Seitenansicht des Fahrzeuges mit annähernd konstanter und hoher Bildauflösung.

In einem optionalen Ausführungsbeispiel umfasst der Schritt 354 des Aufbereitens einen Schritt 468 des Fittings von Primitiva im Originalbild und im entzerrten Bild. Dabei können unter dem Originalbild die Bilddaten und dem entzerrten Bild die aufbereiteten Bilddaten verstanden werden. Als eine Möglichkeit zur Identifikation von Rädern im Bild beziehungsweise den Bilddaten wird das Fitting geometrischer Primitiva genutzt. Insbesondere sind in diesem Ausführungsbeispiel Kreise und Ellipsen und Segmente von Kreisen oder Ellipsen als Primitiva zu verstehen. Klassische Schätzmethoden liefern Gütemaße für eine Anpassung eines Primitivums an eine Radkontur. Das Kreisfitting in der transformierten Seitenansicht kann durch ein Ellipsenfitting im Originalbild an korrespondierender Stelle abgesichert werden. Durch Fitting von Segmenten ergeben sich Kandidaten für die jeweiligen zugehörigen Mittelpunkte. Eine Häufung solcher Mittelpunktschätzungen zeigt eine erhöhte Wahrscheinlichkeit eines Radmittelpunktes und somit einer Achse an.

Optional umfasst der Schritt 354 des Aufbereitens einen optionalen Teilschritt 470 des Detektierens von Radialsymmetrien. Räder zeichnen sich durch radialsymmetrische Muster in der Abbildung, das heißt den Bilddaten, aus. Diese Muster können mittels Akkumulationsmethoden erkannt werden. Dazu werden für Kandidaten von Zentren der Symmetrien Transformationen in Polarkoordinaten durchgeführt. In der Polardarstellung ergeben sich Translationssymmetrien, die mittels Verschiebungsdetektion erkannt werden. Als Ergebnis entstehen bewertete Kandidaten für Mittelpunkte von Radialsymmetrien, die wiederum auf Räder hinweisen.

In einem optionalen Ausführungsbeispiel umfasst der Schritt 354 des Aufbereitens einen Schritt 472 des Klassifizierens von Bildbereichen. Weiterhin werden für die Erkennung von Radbereichen im Bild Klassifikationsmethoden eingesetzt. Vorab wird dazu ein Klassifikator trainiert, also mit annotierten Referenzdatensätzen die Parameter des Klassifikators berechnet. Im Anwendungsfall wird ein Bildbereich, das heißt ein Teilbereich der Bilddaten, durch den Klassifikator mit einem Wert versehen, der die Wahrscheinlichkeit beschreibt, dass es sich dabei um einen Radbereich handelt. Die Vorauswahl eines solchen Bildbereiches kann mittels der anderen hier vorgestellten Methoden erfolgen.

Optional umfasst der Schritt 354 des Aufbereitens einen optionalen Teilschritt 474 der Hintergrundschätzung mit einer Kamera. Hierbei wird genutzt, dass statischer Hintergrund im Bild mit statistischen Methoden erkannt werden kann. Durch Akkumulation verarbeiteter, lokaler Grauwerte kann eine Streuung ermittelt werden, die mit der Wahrscheinlichkeit von statischem Bildhintergrund korreliert. Bei einer Fahrzeugdurchfahrt können Bildbereiche, die an das Fahrzeug angrenzen, der Straßenoberfläche zugeordnet werden. Diese Hintergrundpunkte können auch in eine andere Ansicht, beispielsweise die Seitenansicht, transformiert werden. Somit wird die Möglichkeit geboten, die Konturen der Räder gegen den Hintergrund abzugrenzen. Mit dem runden Kantenverlauf ist ein charakteristisches Erkennungsmerkmal gegeben.

In einem Ausführungsbeispiel umfasst der Schritt 354 des Aufbereitens einen optionalen Schritt 476 zur Ermittlung von Aufstandspunkten auf der Straßenoberfläche in den Bilddaten der Stereokamera oder einer 3D-Rekonstruktion unter Verwendung der Bilddaten. Die 3D-Rekonstruktion des Stereosystems kann genutzt werden, um Kandidaten für Radpositionen zu identifizieren. Aus der 3D-Schätzung der Straßenoberfläche in Kombination mit dem 3D-Objektmodell lassen sich Positionen im 3D-Raum bestimmen, die der Straßenoberfläche sehr nahe kommen oder diese berühren. An diesen Stellen ist das Vorhandensein eines Rades wahrscheinlich, es ergeben sich Kandidaten für die weitere Bewertung.

Der Schritt 354 des Aufbereitens umfasst optional einen Teilschritt 478 des modellbasierten Erkennens der Räder aus den 3D-Objektdaten eines Fahrzeuges. Dabei kann unter den 3D-Objektdaten die Objektinformation verstanden werden. Durch Bündelblockausgleich oder andere Methoden der 3D-Optimierung kann ein qualitativ hochwertiges 3D-Modell eines Fahrzeuges erzeugt werden. Damit ist die modellbasierte 3D-Erkennung der Radkonturen möglich.

In einem optionalen Ausführungsbeispiel umfasst der Schritt 354 des Aufbereitens einen Schritt 480 der Projektion aus der 3D-Messung ins Bild der Seitenansicht. Dabei werden aus dem 3D-Modell ermittelte Informationen in der transformierten Seitenansicht genutzt, beispielsweise zur Erkennung ruhender Achsen. Hierzu werden 3D-Informationen derselben Homografie der Seitenansicht unterzogen. Als Vorverarbeitung wird dazu das 3D-Objekt in die Ebene der Fahrzeugseite projiziert werden. Der Abstand des 3D-Objektes von der Seitenebene ist bekannt. In der transformierten Ansicht ist dann die Projektion des 3D-Objektes in die Ansicht der Fahrzeugseite zu sehen.

Optional umfasst der Schritt 354 des Aufbereitens einen optionalen Teilschritt 482 der Prüfung auf Selbstähnlichkeiten. Radbereiche eines Fahrzeuges sehen in einer Seitenansicht üblicherweise sehr ähnlich aus. Dieser Umstand kann genutzt werden, indem mittels Autokorrelation Selbstähnlichkeiten einer bestimmten Bildregion der Seitenansicht geprüft werden. Ein Peak (Spitzen) oder eine Mehrzahl von Peaks im Ergebnis der Autokorrelationsfunktion zeigt Verschiebungen des Bildes an, die zu einer möglichst großen Ähnlichkeit der Bildinhalte führen. Aus Anzahl und Abständen der Peaks lassen sich Rückschlüsse über mögliche Radpositionen ziehen.

In einem Ausführungsbeispiel umfasst der Schritt 354 des Aufbereitens einen optionalen Schritt 484 des Analysierens einer Bewegungsunschärfe zur Erkennung bewegter und ruhender Achsen. Ruhende Achsen sind am Fahrzeug hochgesetzt, sodass die zugehörigen Räder nicht genutzt werden. Kandidaten für genutzte Achsen zeichnen sich durch eine Bewegungsunschärfe wegen einer Radrotation aus. Neben den unterschiedlichen Höhenlagen ruhender und bewegter Räder im Bild markieren die unterschiedlichen Bewegungsunschärfen Merkmale zur Erkennung ruhender und bewegter beziehungsweise rollender oder belasteter Achsen. Für Bildbereiche, in denen ein Rad abgebildet ist, wird die Abbildungsschärfe durch Summierung der Beträge der zweiten Ableitungen im Bild abgeschätzt. Räder an bewegten Achsen bieten durch die Rotationsbewegung eine weniger scharfe Abbildung als Räder an ruhenden Achsen. Als Ergebnis entsteht eine erste Abschätzung, welche Achsen ruhend beziehungsweise bewegt sind. Weitere Information für die Differenzierung kann aus dem 3D-Modell herangezogen werden.

Als weiterer Ansatz wird optional die Bewegungsunschärfe aktiv gesteuert und bemessen. Dazu werden entsprechend hohe Belichtungszeiten genutzt. Die resultierenden Bilder zeigen geradlinige Bewegungsverläufe entlang der Fahrtrichtung bei ruhenden Achsen und radiale Verläufe an bewegten Achsen.

In einem besonderen Ausführungsbeispiel leisten mehrere Verfahrensschritte die Einrichtung des Systems sowie die Auswertung des fließenden Verkehrs bezüglich der Aufgabenstellung. Wenn ein optionaler Radarsensor genutzt wird, werden in einem nicht gezeigten Schritt des Fusionierens mittels Datenfusion auf verschiedenen Ebenen einzelne Verfahrensschritte optimiert. Mittels Radarsensor werden insbesondere die Abhängigkeiten gegenüber Sichtverhältnissen reduziert. Ungünstige Witterung und Dunkelheit werden in ihrem Einfluss auf die Erfassungsrate reduziert. Wie bereits in Fig. 3 beschrieben umfasst der Schritt 354 des Aufbereitens zumindest drei Teilschritte 358, 360, 362. Im Schritt 358 des Detektierens erfolgt eine Detektion von Objekten, das heißt eine Erfassung von Objekten auf der Straße im Überwachungsbereich. Dabei ist eine Datenfusion mit Radar vorteilhaft. Im Schritt 360 des Verfolgens erfolgt ein Tracking von Objekten, das heißt ein Verfolgen bewegter Objekte im zeitlichen Verlauf. Eine Erweiterung oder Kombination mit einem optionalen Schritt des Fusionierens zur Datenfusion mit Radar ist im Schritt 360 des Verfolgens vorteilhaft. Im Teilschritt 362 des Klassifizierens erfolgt eine Klassifikation von Objekten oder eine Identifikation von Kandidaten für Lastfahrzeuge. Im Teilschritt 362 des Klassifizierens ist eine Datenfusion mit Radar vorteilhaft.

In einem optionalen Ausführungsbeispiel weist das Verfahren einen nicht gezeigten Schritt des Kalibrierens und einen nicht gezeigten Schritt des Einrichtens der Verkehrsszene auf. Im Schritt des Kalibrierens erfolgt optional eine Selbstkalibrierung oder eine Überführung der Sensorik in einen Zustand der Messbereitschaft. Als Ergebnis des optionalen Schritts des Einrichtens der Verkehrsszene ist eine Ausrichtung der Sensorik zur Straße bekannt.

Vorteilhaft nutzt das beschriebene Verfahren 350 3D-Informationen und Bildinformationen, wobei eine entsprechende Vorrichtung, wie beispielsweise in Fig. 1 gezeigt, an einem einzelnen Mast installierbar ist. Eine Verwendung von Stereokamera und optional ergänzend einer Radarsensorik schafft ein robustes System mit robuster, preiswerter Sensorik und ohne bewegte Teile. Vorteilhaft weist das Verfahren 350 eine robuste Erkennungsleistung auf, wobei eine entsprechende Vorrichtung, wie in Fig. 1 oder Fig. 2 gezeigt, eine Systemfähigkeit zur Selbstkalibrierung und Selbsteinrichtung aufweist.

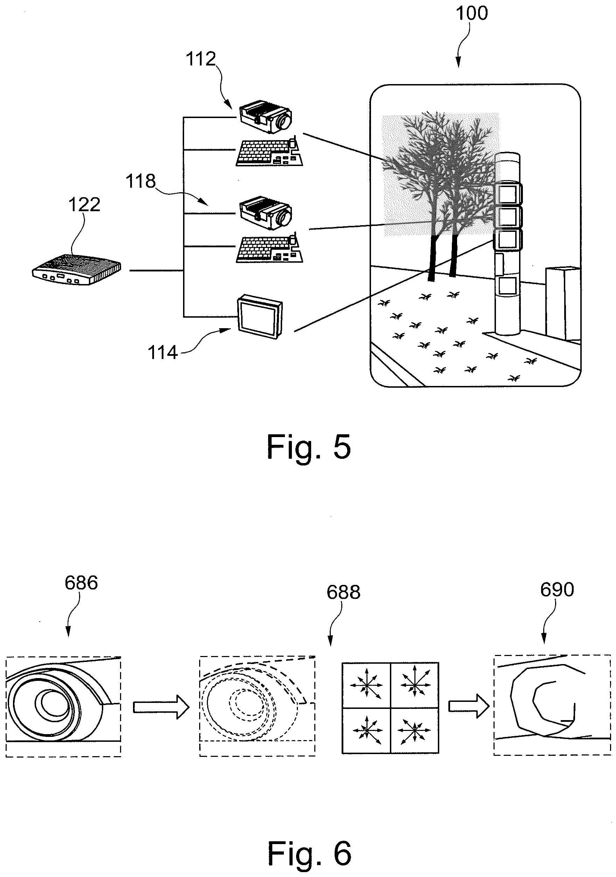

Fig. 5 zeigt eine schematische Darstellung eines Achsenzählsystems 100 gemäß einem Ausführungsbeispiel der vorliegenden Erfindung. Das Achsenzählsystem 100 ist in einer Säule installiert. Dabei kann es sich bei dem Achsenzählsystem 100 um ein Ausführungsbeispiel eines in Fig. 1 gezeigten Achsenzählsystems 100 handeln. Das Achsenzählsystem 100 umfasst in dem in Fig. 5 gezeigten Ausführungsbeispiel zwei Kameras 112, 118, eine Achsenzähl-Vorrichtung 114 sowie eine Einrichtung 122 zur Fernübertragung von Daten. Die beiden Kameras 112, 118 sowie die Achsenzähl-Vorrichtung 114 sind zusätzlich separat neben dem Achsenzählsystem 100 dargestellt. Die Kameras 112, 118, die Achsenzähl-Vorrichtung 114 sowie die Einrichtung 122 zur Fernübertragung von Daten sind über ein Bussystem miteinander gekoppelt. Beispielsweise sind die genannten Einrichtungen des Achsenzählsystems 100 über einen Ethernet-Bus miteinander gekoppelt. Sowohl die Stereokamera 112 als auch die weitere Sensorik 118, die stellvertretend für eine Stereokamera 118 als auch eine Monokamera 118 oder eine Radar-Sensorik 118 steht, sind in dem in Fig. 5 gezeigten Ausführungsbeispiel als eine Sensorik 112, 118 mit abgesetztem Sensorkopf beziehungsweise Kamerakopf dargestellt. Die dem Sensorkopf beziehungsweise Kamerakopf zugeordnete Platine umfasst Einrichtungen zur Vorverarbeitung der erfassten Sensordaten sowie zum Bereitstellen der Bilddaten. Eine Kopplung zwischen dem Sensorkopf und der zugeordneten Platine erfolgt in einem Ausführungsbeispiel über den bereits erwähnten Ethernet-Bus und in einem anderen nicht gezeigten Ausführungsbeispiel über einen proprietären Sensorbus wie beispielsweise Camera-Link, Firewire IEEE-1394 oder GigE (Gigabit-Ethernet) mit Power-over-Ethernet (PoE). In einem weiteren nicht gezeigten Ausführungsbeispiel sind die dem Sensorkopf zugeordnete Platine, die Einrichtung 122 zur Fernübertragung von Daten sowie die Achsenzähl-Vorrichtung 114 über einen standardisierten Bus wie beispielsweise PCI oder PCle miteinander gekoppelt. Selbstverständlich ist eine beliebige Kombination der genannten Technologien sinnvoll und möglich.

In einem weiteren nicht gezeigten Ausführungsbeispiel weist das Achsenzählsystem 100 mehr als zwei Sensoriken 112, 118 auf. Denkbar ist beispielsweise der Einsatz von zwei unabhängigen Stereokameras 112 sowie einer Radarsensorik 118. Alternativ weist beispielsweise ein nicht dargestelltes Achsenzählsystem 100 eine Stereokamera 112, eine Monokamera 118 sowie eine Radarsensorik 118 auf.

Fig. 6 zeigt eine Konzeptdarstellung einer Klassifikation gemäß einem Ausführungsbeispiel der vorliegenden Erfindung. Eine derartige Klassifikation kann beispielsweise in einem Ausführungsbeispiel in dem in Fig. 4 beschriebenen Schritt 472 des Klassifizierens als Teilschritt des Schritts 354 des Aufbereitens des Verfahrens 350 verwendet werden. Bei dem in Fig. 6 gezeigten Ausführungsbeispiel wird ein HOG-basierter Detektor eingesetzt. Dabei steht die Abkürzung HOG für "Histograms of Oriented Gradients" und bezeichnet ein Verfahren zur Merkmalsgewinnung in der Bildverarbeitung. Die Klassifikation schafft ein selbstständiges Lernen der Objekteigenschaften (Template) anhand bereitgestellter Trainingsdaten, hierbei werden im Wesentlichen Mengen aus Objektkanten in verschiedenen Positionen, Längen und Orientierungen gelernt. Dabei werden in einem Ausführungsbeispiel über eine Mehrzahl von Tagen Objekteigenschaften trainiert. Die hier gezeigte Klassifikation schafft eine Echtzeitprozessierung durch einen Kaskaden-Ansatz und bildpunktgenauem Anfragemechanismus beispielsweise eine Anfragegenerierung durch Stereo-Vorverarbeitung.

Der in Fig. 6 detaillierte beschriebene Schritt 472 des Klassifizierens weist einen ersten Teilschritt 686 des Erzeugens eines Trainingsdatensatzes auf. Der Trainingsdatensatz wird in dem Ausführungsbeispiel unter Verwendung einiger 1000 Bilder erzeugt. In einem zweiten Teilschritt 688 des Berechnens werden die HOG-Features aus Gradienten und Statistiken berechnet. In einem dritten Teilschritt 690 des Lernens werden die Objekteigenschaften gelernt und eine universelle textuelle Repräsentation erlernt.

Eine derartige textuelle Repräsentation kann beispielsweise wie folgt dargestellt werden:

```
         <weakClassifiers>
            <_>
            <internalNodes>
                0 -1 29 5.1918663084506989e-1
            <leafValues>
                - 9.6984922885894775e-0,01 9 .6
            <_>
            <internalNodes>
                0 - 1 31 1.4692706510160446e-1
            <leafValues>
```

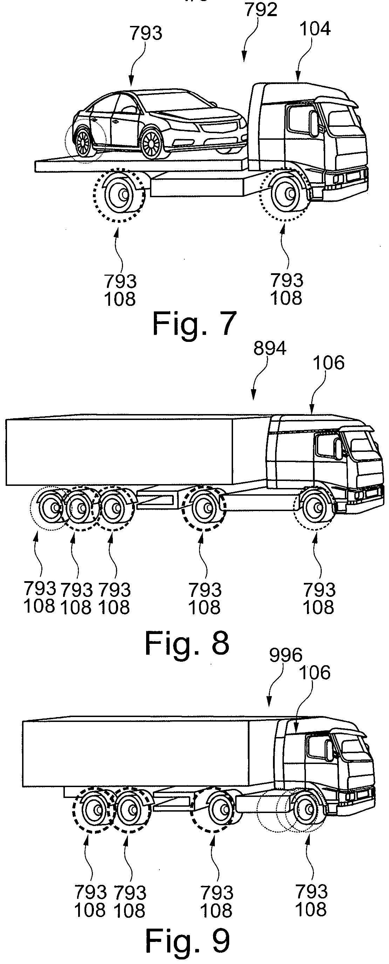

Fig. 7 bis Fig. 9 zeigen eine fotografische Seitenansicht 792, 894, 996 und Darstellung erkannter Achsen 793 gemäß einem Ausführungsbeispiel der vorliegenden Erfindung. Bei den erkannten Achsen 793 kann es sich um rollende Achsen 108 sowie ruhende Achsen 110 eines in Fig. 1 gezeigten Ausführungsbeispiels handeln. Eine Erkennung der Achsen kann mit dem in Fig. 1 und Fig. 2 gezeigten Achsenzählsystem 100 erfolgen. Auf den fotografischen Seitenansichten 792, 894, 996 ist jeweils ein Fahrzeug 104, 106 dargestellt.

In Fig. 7 ist ein Abschleppwagen 104 mit einem weiteren Fahrzeug auf der Ladefläche in einer Seitenansicht 792 gemäß einem Ausführungsbeispiel der vorliegenden Erfindung dargestellt. Wenn das Achsenzählsystem zur Erfassung und Berechnung einer Gebührenpflicht für die Nutzung von Verkehrswegen eingesetzt wird, so sind nur die rollenden oder ruhenden Achsen des Abschleppwagens 104 relevant. In der in Fig. 7 gezeigten fotografischen Seitenansicht 792 wird neben zwei (rollenden) Achsen 108, 793 des Abschleppwagens 104 zumindest eine Achse 793 des sich auf der Ladefläche des Fahrzeugs 104 befindlichen Fahrzeugs erkannt und entsprechend für einen Betrachter der fotografischen Seitenansicht 792 markiert.

Fig. 8 zeigt ein Fahrzeug 106 in einer Seitenansicht 894 gemäß einem Ausführungsbeispiel der vorliegenden Erfindung. Bei dem Fahrzeug 106 handelt es sich in der Darstellung um einen Sattelschlepper mit einem Auflieger ähnlich zu dem in Fig. 1 gezeigten Ausführungsbeispiel. Die Zugmaschine beziehungsweise der Sattelschlepper weist zwei Achsen auf, der Auflieger weist drei Achsen auf. In der Seitenansicht 894 sind insgesamt fünf Achsen 793 erkannt und markiert. Dabei handelt es sich bei den zwei Achsen des Sattelschleppers sowie den ersten beiden auf den Sattelschlepper folgenden Achsen des Aufliegers um rollende Achsen 108, sowie bei der dritten Achse des Aufliegers um eine ruhende Achse 110.

Fig. 9 zeigt ein Fahrzeug 106 in einer Seitenansicht 996 gemäß einem Ausführungsbeispiel der vorliegenden Erfindung. Bei dem Fahrzeug 106 handelt es sich ähnlich zu der Darstellung in Fig. 8 um einen Sattelschlepper mit einem Auflieger. Das in Fig. 9 dargestellte Fahrzeug 106 weist insgesamt vier Achsen 108 auf, die als erkannte Achsen 793 in der Darstellung markiert sind. Bei den vier Achsen 108 handelt es sich um rollende Achsen 108.

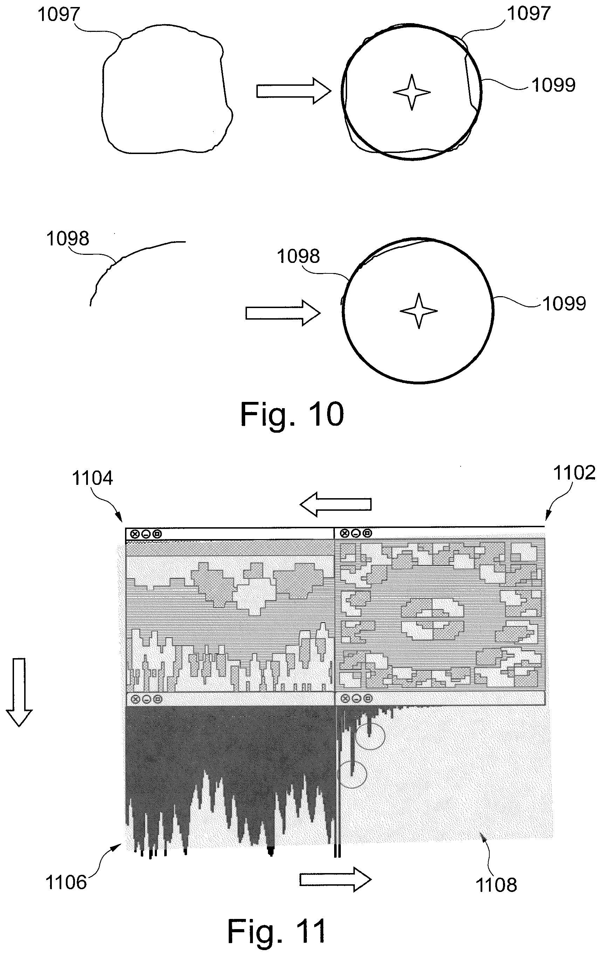

Fig. 10 zeigt eine Konzeptdarstellung eines Fittings von Primitiva gemäß einem Ausführungsbeispiel der vorliegenden Erfindung. Ein derartiges Fitting von Primitiva kann beispielsweise in einem Ausführungsbeispiel in dem in Fig. 4 beschriebenen Schritt 468 des Fittings von Primitiva als Teilschritt des Schritts 354 des Aufbereitens des Verfahrens 350 verwendet werden. Der in Fig. 4 beschriebene Schritt 468 des Fittings von Primitiva umfasst in einem in Fig. 10 dargestellten Ausführungsbeispiel drei Teilschritte, wobei in einem ersten Teilschritt eine Extraktion relevanter Konturen 1097, 1098 mittels Bandpassfilter und Kantendetektor erfolgt, in einem zweiten Teilschritt eine Vorfilterung von Konturen 1097, 1098 durchgeführt wird und in einem dritten Teilschritt ein Fitting von Ellipsen 1099 oder Kreisen 1099 an gefilterte Konturen 1097, 1098. Dabei kann unter einem Fitting ein Einpassen oder Anpassen verstanden werden. Unter einem Primitivum 1099 kann eine geometrische (Basis-) Form verstanden werden. So wird in dem in Fig. 10 dargestellten Ausführungsbeispiel unter einem Primitivum 1099 ein Kreis 1099 verstanden, in einem alternativen nicht gezeigten Ausführungsbeispiel wird unter einem Primitivum 1099 eine Ellipse 1099 verstanden. Allgemein kann unter einem Primitivum ein planares geometrisches Objekt verstanden werden. Vorteilhaft können Objekte mit in einer Datenbasis abgelegten Primitiva verglichen werden. So kann in einem Teilschritt des Lernens die Datenbasis mit den Primitiva geschaffen werden.

In Fig. 10 ist eine erste geschlossene Kontur 1097 dargestellt, in die ein Kreis 1099 als Primitivum 1099 eingepasst wird. Darunter ist eine Kontur eines Kreissegments 1098 dargestellt, die einen Teilbereich des Primitivums 1099 in Form eines Kreises 1099 folgt. In einem günstigen Ausführungsbeispiel wird ein entsprechendes Segment 1098 erkannt und als Teil eines Rades oder Achse durch ein Einpassen in das Primitivum erkannt.

Fig. 11 zeigt eine Konzeptdarstellung eines Erkennens von Radialsymmetrien gemäß einem Ausführungsbeispiel der vorliegenden Erfindung. Ein derartiges Erkennen von Radialsymmetrien kann beispielsweise in einem Ausführungsbeispiel in dem in Fig. 4 beschriebenen Schritt 470 des Erkennens von Radialsymmetrien als Teilschritt des Schritts 354 des Aufbereitens des Verfahrens 350 verwendet werden. Wie bereits in Fig. 4 beschrieben, zeichnen sich Räder und somit Achsen eines Fahrzeugs als radialsymmetrische Muster in den Bilddaten ab. Fig. 11 zeigt vier Abbildungen 1102, 1104, 1106, 1108. Eine erste Abbildung 1102, in Fig. 11 oben rechts angeordnet, zeigt einen Ausschnitt eines Bildes oder von Bilddaten mit einem darin abgebildeten Rad. Ein solcher Ausschnitt wird auch als "Region of Interest", ROI oder "Bereich von Interesse" bezeichnet. Der in der Abbildung 1102 ausgewählte Bereich stellt einen stark vergrößerten Bereich oder Ausschnitt von Bilddaten oder aufbereiteten Bilddaten dar. Die Darstellungen 1102, 1104, 1106, 1108 oder Abbildungen 1102, 1104, 1106, 1108 sind entgegen dem Uhrzeigersinn angeordnet. In der zweiten Abbildung 1104 in Fig. 11 oben links ist der in der ersten Abbildung ausgewählte Bildbereich in Polarkoordinaten transformiert dargestellt. In der dritten Abbildung 1106 in Fig. 11 unten links zeigt ein Histogramm der Polardarstellung 1104 nach Anwendung eines Sobel-Operators. Dabei wird eine erste Ableitung der Bildpunkt-Helligkeitswerte bestimmt, wobei gleichzeitig orthogonal zur Ableitungsrichtung geglättet wird. In der vierten Abbildung 1108 in Fig. 11 unten rechts ist eine Frequenzanalyse dargestellt. So zeigen die vier Abbildungen 1102, 1104, 1106, 1108 vier Teilschritte oder Teilaspekte, die nacheinander zum Erkennen von Radialsymmetrien ausgeführt werden: eine lokale Umgebung in Abbildung 1102, ein Polarbild in Abbildung 1104, ein Histogramm in Abbildung 1106 sowie abschließend eine Frequenzanalyse in Abbildung 1108.

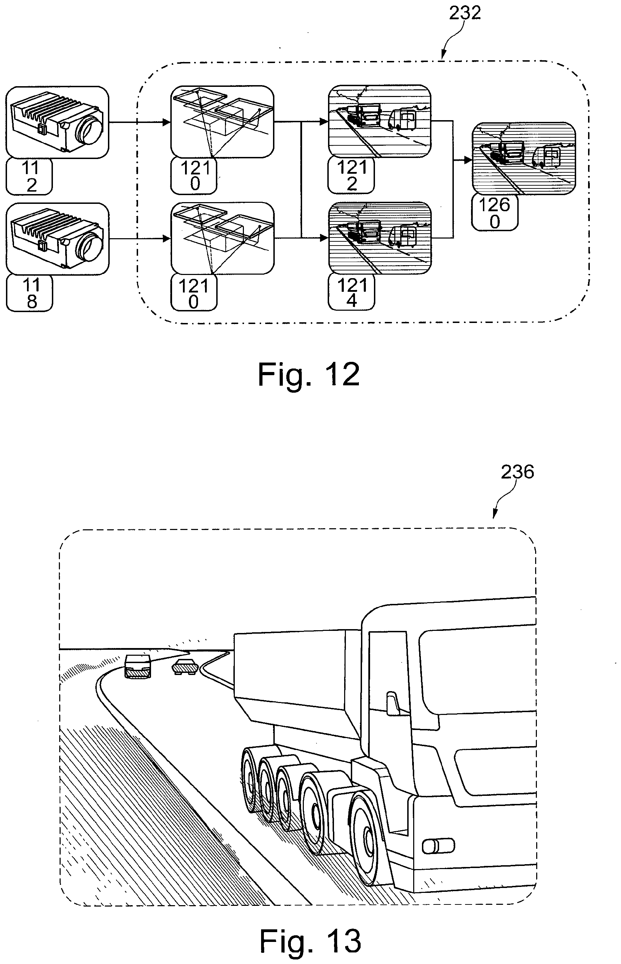

Fig. 12 zeigt eine Konzeptdarstellung einer Stereobildverarbeitung gemäß einem Ausführungsbeispiel der vorliegenden Erfindung. Die Stereobildverarbeitung weist eine erste Stereokamera 112 sowie eine zweite Stereokamera 118 auf. Die Bilddaten der Stereokameras werden über eine nicht näher dargestellte Schnittstelle an eine Einrichtung 232 zum Aufbereiten geleitet. Bei der Einrichtung 232 zum Aufbereiten kann es sich um ein Ausführungsbeispiel der in Fig. 2 gezeigten Einrichtung 232 zum Aufbereiten handeln. In dem hier dargestellten Ausführungsbeispiel weist die Einrichtung 232 zum Aufbereiten für jede angeschlossene Stereokamera 112, 118 eine Einrichtung 1210 zur Rektifizierung auf. In der Einrichtung 1210 zu Rektifizierung werden geometrische Verzerrungen in den Bilddaten eliminiert und als aufbereitete Bilddaten bereitgestellt. In diesem Sinne schafft die Einrichtung 1210 zu Rektifizierung eine spezielle Form der Georeferenzierung von Bilddaten. Die von der Einrichtung 1210 zur Rektifizierung aufbereiteten Bilddaten werden an eine Einrichtung 1212 des optischen Flusses übermittelt. Unter dem optischen Fluss der Bilddaten, einer Sequenz von Bilddaten oder einer Bildsequenz kann in diesem Fall das Vektorfeld der in die Bildebene projizierten Geschwindigkeit von sichtbaren Punkten des Objektraumes im Bezugssystem der Abbildungsoptik verstanden werden. Weiterhin werden die von der Einrichtung 1110 zu Rektifizierung aufbereiteten Bilddaten an eine Einrichtung 1214 der Disparität übermittelt. Die Querdisparation ist ein Versatz oder Offset in der Position, den das gleiche Objekt in der Abbildung auf zwei unterschiedlichen Bildebenen einnimmt. Die Einrichtung 1214 zur Ermittlung der Disparität ist ausgebildet, einen Abstand zu einem abgebildeten Objekt in den Bilddaten zu ermitteln. Die aufbereiteten Bilddaten sind somit gleichbedeutend zu einem Tiefenbild. Sowohl die aufbereiteten Bilddaten der Einrichtung 1214 zur Ermittlung der Disparität als auch die aufbereiteten Bilddaten der Einrichtung 1212 werden an eine Einrichtung 1260 des Verfolgens und Klassifizierens übertragen. Die Einrichtung 1112 ist ausgebildet, ein in den Bilddaten abgebildetes Fahrzeug über eine Mehrzahl von Bilddaten zu verfolgen und zu klassifizieren.

Fig. 13 zeigt vereinfachte Darstellung von aufbereiteten Bilddaten 236 mit einer Kennzeichnung fahrbahnnaher Objekte gemäß einem Ausführungsbeispiel der vorliegenden Erfindung. Die Darstellung in Fig. 13 zeigt eine 3D-Punktwolke aus Disparitäten. Eine entsprechende Darstellung auf einem Anzeigegerät mit Farbdarstellung (Farbmonitor) der in Fig. 13 dargestellten Bilddaten zeigt als Farbcodierung eine Höhe der dargestellten Objekte über einer Fahrbahn. Für die hier dargestellte Anwendung ist eine Farbcodierung von Objekten bis zu einer Höhe von 50 cm über der Fahrbahn sinnvoll und hier dargestellt.

Die Erfassung von bestimmten Fahrzeugmerkmalen wie z. B. Länge, Anzahl der Achsen (inkl. hochgefahrener Achsen), Aufbauten, Unterteilung in Komponenten (Zugmaschinen, Hänger, etc.) ist eine anspruchsvolle Aufgabe für Sensoren (Radar, Laser, Kamera, etc.). Grundsätzlich kann dieses Problem mit klassischen Systemen wie Radar-, Laser- oder Schleifenanlagen eingeschränkt oder gar nicht gelöst werden. Die Verwendung von Frontalkameras oder in leichtem Winkel (0°-25° Verdrehung zwischen Sensorachse zur Fahrtrichtung) auf die Fahrzeuge schauende Kameras erlaubt nur eine eingeschränkte Erfassung der Fahrzeugeigenschaften. In diesem Fall sind hohe Auflösungen, hohe Rechenleistung und ein exaktes geometrisches Modell des Fahrzeugs für eine Erfassung der Eigenschaften notwendig. Derzeit eingesetzte Sensoriken erfassen jeweils nur einen begrenzten Teil der für eine Klassifikation notwendigen Daten. So können mit invasiven Anlagen (Schleifen) Längen, Geschwindigkeit und Anzahl der aufgesetzten Achsen bestimmt werden. Radar-, Laser- und Stereosysteme erlauben es, die Höhe, Breite und / oder Länge zu erfassen.

Bisherige Sensoriken können diese Aufgaben oft nur eingeschränkt erfüllen. Bisherige Sensoriken sind nicht in der Lage sowohl aufgesetzte Achsen als auch hochgefahrene Achsen zu erfassen. Weiterhin ist keine ausreichend gute Trennung nach Zugmaschinen und Anhängern möglich. Ebenso ist die Unterscheidung zwischen Bussen und LKW mit Windshields mit konventionellen Mitteln schwer.

Die hier vorgeschlagene Lösung ermöglicht die Erzeugung einer hochwertigen Seitenansicht eines Fahrzeuges aus denen Merkmale wie Achszahl, Achszustand (hochgefahren, abgesetzt), Zugmaschinen-Anhängertrennung, Höhen und Längenschätzungen ermittelt werden können. Die vorgeschlagene Lösung ist kostengünstig und kommt mit wenig Rechenleistung / Energieverbrauch aus.

Der hier vorgestellte Ansatz soll es ferner ermöglichen mit wenig Rechenaufwand und geringen Sensorkosten eine hochwertige Erfassung von aufgesetzten und hochgefahrenen Fahrzeugachsen ermöglichen. Weiterhin soll der hier vorgestellte Ansatz die Möglichkeit bieten, Zugmaschinen und Hänger voneinander getrennt zu erfassen, sowie eine genaue Abschätzung der Fahrzeuglänge und Fahrzeughöhe zu liefern.

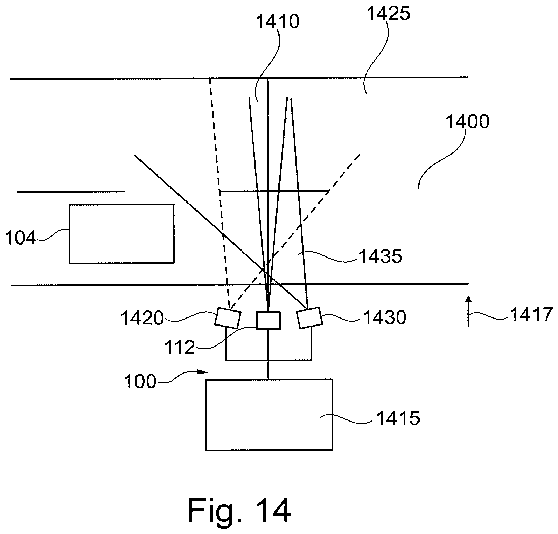

Fig. 14 zeigt eine Darstellung einer Anordnung eines Achszählystems 100 mit einem Bilddatenaufnahmesensor 112 (auch als Kamera bezeichnet) neben einer Fahrbahn 1400. Auf der Fahrbahn 1400 fährt ein Fahrzeug 104, dessen Achsen gezählt werden sollen. Wenn das Fahrzeug durch den von dem Bildaufnahmesensor 112 überwachten Überwachungsbereich 1410 fährt, wird hierbei ein Bild von der Seite des Fahrzeugs 104 in Querrichtung 1417 zur Fahrbahn 1400 aufgenommen und zu einer Recheneinheit bzw. zur Bildauswerteeinheit 1415 übertragen, in der ein Algorithmus zur Erkennung bzw. Erfassung von einer Position und/oder Anzahl von Achsen des Fahrzeugs 104 aus dem Bild dem Bilddatenaufnahmesensor 112 ausgeführt wird. Um den Überwachungsbereich 1410 auch bei ungünstigen Lichtverhältnissen möglichst optimal ausleuchten zu können, wird ferner eine Blitzeinheit 1420 vorgesehen, die beispielsweise einen (Infrarot-) Lichtblitz in einen Blitzbereich 1425 aussendet, der sich mit einem Großteil des Überwachungsbereichs 1410 überschneidet. Denkbar ist ferner noch, dass eine unterstützende Sensorik 1430 vorgesehen ist, die ausgebildet ist, um eine zuverlässige Erkennung der Achsen eines an dem Bildaufnahmesensor 112 vorbeifahrenden Fahrzeugs 104 sicherzustellen. Beispielsweise kann eine solche unterstützende Sensorik einen in der Fig. 14 nicht dargestellten Radar-, Lidar- und/oder Ultraschallsensor aufweisen, der ausgebildet ist, um in einem Sensorikbereich 1435 eine Entfernung des an der Bildaufnahmeeinheit 112 vorbeifahrenden Fahrzeugs zu ermitteln und diese Entfernung für die Erkennung von Fahrspuren zu verwenden, auf denen das Fahrzeug 104 fährt. Hierdurch kann dann beispielsweise auch sichergestellt werden, dass nur die Achsen von Fahrzeugen 104 gezählt werden, die in einem bestimmten Abstandsintervall an dem Achszählystem 100 vorbeifahren, sodass die Fehleranfälligkeit eines solchen Achszählsystems 100 reduziert werden kann. Eine Ansteuerung der Blitzeinheit 1420 bzw. die Verarbeitung der Daten von der unterstützenden Sensorik 1430 kann dabei ebenfalls in der Bildauswerteeinheit 1415 erfolgen.

Die vorgeschlagene Lösung beinhaltet somit optional einen Blitz 1420, um auch bei geringen Lichtverhältnissen hochwertige Seitenbilder zu erzeugen. Ein Vorteil des geringen Seitenabstandes ist ein geringer Stromverbrauch der so realisierten Beleuchtung. Die vorgeschlagene Lösung kann durch eine weitere Sensorik 1430 (Radar, Lidar, Laser) unterstützt werden, um die Bildverarbeitung hinsichtlich der Detektion von Fahrzeugen und der Berechnung des optischen Flusses zu entlasten (Reduktion der Rechenkraft).

Ebenso ist es denkbar, dass vor- oder nachgelagerte Sensoriken die Information über die Geschwindigkeit und den Ort an die Seitenkamera weitermelden, damit die Seitenkamera bessere Schätzungen zum Stitchingversatz ableiten kann.

Eine weitere Komponente der vorgeschlagenen Lösung ist somit eine Kamera 112, die mit einem Winkel von ca. 90° bei kleinem bis mittleren Seitenabstand (2-5m) und geringer Höhe (0-3m) zu dem Verkehr installiert wird, wie dies beispielsweise . Es wird ein Objektiv gewählt, bei dem die relevanten Merkmale des Fahrzeuges 104 erfasst werden können (ausreichend kleine Brennweite, sprich: großer Öffnungswinkel). Um eine hochwertige Seitenaufnahme des Fahrzeuges 104 zu erzeugen, wird die Kamera 112 mit einer hohen Frequenz von einigen 100 Hz betrieben. Dabei wird eine Kamera-ROI eingestellt, die einige wenige (z. B. 1-100) Pixel in der Breite beträgt. Dadurch fallen perspektivische Verzerrungen und optikbasierte Verzeichnung (in der Bildhorizontalen) sehr gering aus.

Über eine Bildanalyse (die beispielsweise in der Bildauswerteeinheit 1415 ausgeführt wird) wird ein optischer Fluss zwischen den einzeln erzeugten Slices (Bildern) bestimmt. Mittels Stitching können dann die Slices zu einem Einzelbild kombiniert werden.

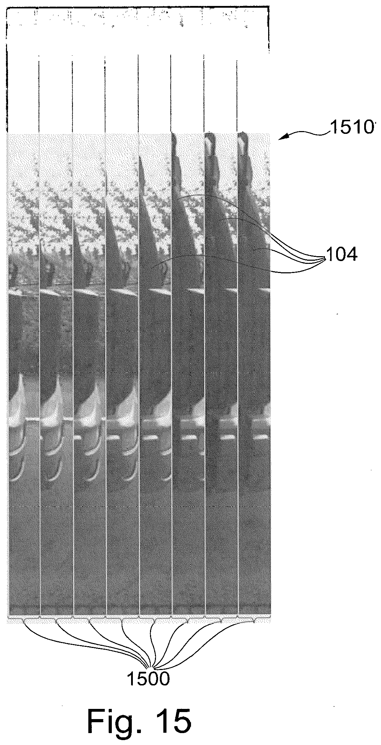

Fig. 15 zeigt eine Darstellung eines solchen Stitchings, in dem Bildsegmente 1500 des Fahrzeugs 104, die zu unterschiedlichen Zeitpunkten bei der Vorbeifahrt an dem Bilddatenaufnahmesensor 112 aufgenommen wurden, zu einem Gesamtbild 1510 zusammengesetzt wurden.

Werden die in der Fig. 15 gezeigten Bildsegmente 1500 zu einem solchen Gesamtbild zusammengesetzt und der zeitliche Versatz der Bildsegmente (beispielsweise über die mittels eines Radarsensors in der unterstützenden Sensorik 1430 bestimmte Geschwindigkeit des Fahrzeugs 104 bei der Vorbeifahrt am Achszählsystem 100) mitberücksichtigt, kann dann ein sehr genaues und präzises Abbild 1500 der Seitenansicht des Fahrzeugs 104 aus der Kombination der Slices vorgenommen werden, aus dem dann in der Bildauswerteeinheit 1415 sehr einfach die Anzahl /Position der Achsen des Fahrzeugs 104 ermittelt werden kann.

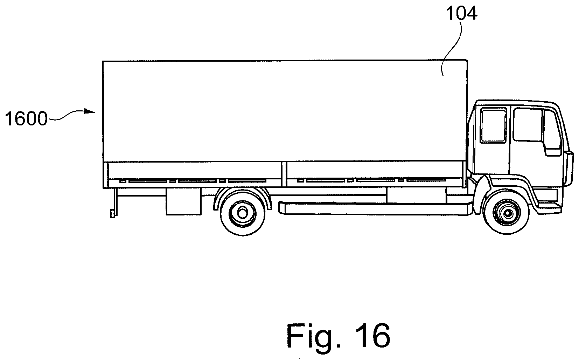

Fig. 16 zeigt ein solches Abbild 1600 eines Fahrzeugs, das aus unterschiedlichen Slices der von dem Bilddatenaufnahmesensor 112 (in 2m Seitenabstand zur Fahrbahn bei 1,5 m Installationshöhe) aufgenommen Bildern 1500 zusammengesetzt bzw. geglättet wird.

Der hier vorgestellte Ansatz schlägt somit ein Achszählsystem 100 vor, das ein Kamerasystem aufweist, das annähernd quer zur Fahrtrichtung den Straßenraum 1410 filmt und mit einer hoher Bildfrequenz Bildstreifen (Slices) aufnimmt, die anschließend zu einem Gesamtbild 1500 bzw. 1600 zusammengesetzt (Stitching) werden, um auf dieser Basis nachgelagerte Informationen wie Länge, Fahrzeugklasse und Achsanzahl des Fahrzeugs 104 zu extrahieren.

Dieses Achszählsystem 100 kann mit einer zusätzlichen Sensorik 1430 ausgestattet sein, die A-Priori-Information darüber liefert, wie weit das Objekt bzw. Fahrzeug 104 von der Kamera 112 in Querrichtung 1417 entfernt ist.

Das System 100 kann ferner mit einer zusätzlichen Sensorik 1430 ausgestattet sein, die A-Priori-Information darüber liefert, wie schnell sich das Objekt bzw. Fahrzeug 104 in Querrichtung 1417 bewegt.

Das System 100 kann ferner im Nachgang das Objekt bzw. Fahrzeug 104 in eine spezifische Fahrzeugklasse klassifizieren, Start, Ende, Länge des Objekts bestimmen und/oder charakteristische Merkmale wie Achsanzahl, Anzahl der Fahrzeuginsassen extrahieren.

Das System 100 kann auch Informationen zur Fahrzeugposition und Geschwindigkeit aus räumlich weiter entfernten Messeinheiten übernehmen, um ein verbessertes Stitching durchzuführen.

Das System 100 kann ferner eine strukturierte Beleuchtung (beispielsweise mittels eines von der Blitzeinheit 1420 ausgesandten Licht- oder Lasermusters, beispielsweise in Streifen- oder Karoform, in den Beleuchtungsbereich 1425) nutzen, um durch vorbekannte Licht- oder Lasermusterstruktur einen Hinweis auf die durch den Abstand des Objektes bzw. Fahrzeugs 104 bewirkten optischen Verzerrungen des Abbildes des Fahrzeugs 104 in dem Bild aus der Bildaufnahmeeinheit 112 extrahieren zu können und die vorgenannten Informationsgewinnung zu unterstützen.

Das System 100 kann ferner mit einer Beleuchtung, beispielsweise im sichtbaren und/oder infraroten Spektralbereich, ausgestattet sein, um die vorgenannte Informationsgewinnung zu unterstützen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (350) zur berührungslosen Achsenzählung eines Fahrzeugs (104, 106) auf einer Fahrbahn (102), wobei das Verfahren (350) die folgenden Schritte aufweist:
Einlesen (352) von ersten Bilddaten (116) und Einlesen von zweiten Bilddaten (216), wobei die ersten Bilddaten (116) und die zweiten Bilddaten (216) an einer Schnittstelle bereitgestellte Bilddaten (116, 216) eines seitlich von der Fahrbahn (102) angeordneten Bilddatenaufnahmesensors (112, 118) repräsentieren, wobei die ersten Bilddaten (116) und die zweiten Bilddaten (216) ein Abbild des Fahrzeugs (104, 106) umfassen;
Aufbereiten (354) der ersten Bilddaten (116) und zweiten Bilddaten (216), um aufbereitete erste Bilddaten (236) und aufbereitete zweite Bilddaten (238) zu erhalten, wobei unter Verwendung der ersten Bilddaten (116) und der zweiten Bilddaten (216) in einem Teilschritt (358) des Detektierens zumindest ein Objekt in den ersten Bilddaten (116) und den zweiten Bilddaten (216) detektiert wird und wobei als eine zu den ersten Bilddaten (116) und zweiten Bilddaten (216) zugeordnete das Objekt repräsentierende Objektinformation (240) bereitgestellt wird und wobei in einem Teilschritt (360) des Verfolgens das zumindest eine Objekt unter Verwendung der Objektinformation (240) in den Bilddaten (116, 216, 236, 238) über die Zeit verfolgt wird sowie wobei in einem Teilschritt (362) des Klassifizierens das zumindest eine Objekt unter Verwendung der Objektinformation (240) identifiziert und/oder klassifiziert wird; und
Bestimmen (356) einer Anzahl von Achsen (108, 110) des Fahrzeugs (104, 106) und/oder einer Zuordnung der Achsen (108, 110) zu ruhenden Achsen (110) des Fahrzeugs (104, 106) und rollenden Achsen (108) des Fahrzeugs (104, 106) unter Verwendung der aufbereiteten ersten Bilddaten (236) und der aufbereiteten zweiten Bilddaten (238) und der den aufbereiteten Bilddaten (236, 238) zugeordneten Objektinformation (240), um die Achsen (108, 110) des Fahrzeugs (104, 106) berührungslos zu zählen, **dadurch gekennzeichnet, dass** der Schritt (354) des Aufbereitens einen Schritt (466) des Stitching umfasst, wobei aus den ersten Bilddaten (116) und den zweiten Bilddaten (216) und daraus abgeleiteten ersten Bilddaten (236) und daraus abgeleiteten zweiten Bilddaten (238) und unter Verwendung der Objektinformation (240) zumindest zwei Bilddaten (116, 216, 236, 238) zusammengefügt werden und als erste aufbereitete Bilddaten (236) bereitgestellt werden und der Schritt (354) des Aufbereitens einen Schritt (464) des homografischen Entzerrens umfasst, in dem die Bilddaten (116, 216) und daraus abgeleitete Bilddaten (236, 238) unter Verwendung der Objektinformation (240) homografisch entzerrt werden und als aufbereitete Bilddaten (236, 238) bereitgestellt werden, sodass eine Seitenansicht des Fahrzeugs (104, 106) in den aufbereiteten Bilddaten (236, 238) homografisch entzerrt ist und der Schritt des Aufbereitens einen Schritt des Analysierens von Bewegungsunschärfen unter Verwendung der ersten Bilddaten und der zweiten Bilddaten und daraus abgeleiteten ersten Bilddaten und daraus abgeleiteten zweiten Bilddaten und der Objektinformation umfasst, um dargestellte Achsen zu ruhenden Achsen des Fahrzeugs und/oder alternativ rollenden Achsen des Fahrzeugs zuzuordnen und als Objektinformation bereitzustellen.

2. Verfahren gemäß Anspruch 1, wobei im Schritt (352) des Einlesens die ersten Bilddaten (116) zu einem ersten Zeitpunkt (t1) erfasste erste Bilddaten und die zweiten Bilddaten (216) zu einem von dem ersten Zeitpunkt (t1) verschiedenen zweiten Zeitpunkt (t2) erfasste Bilddaten repräsentieren.

3. Verfahren gemäß Anspruch 2, wobei im Schritt (352) des Einlesens weitere Bilddaten (116, 216) zu dem ersten Zeitpunkt (t1) und dem zweiten Zeitpunkt (t2) und zu einem von dem ersten Zeitpunkt (t1) und dem zweiten Zeitpunkt (t2) verschiedenen dritten Zeitpunkt eingelesen werden, wobei die weiteren Bilddaten (116, 216) eine von einer Stereokamera (112) und/oder einer Monokamera (118) und/oder einer Radarsensorik (118) erfasste Bildinformation repräsentieren, wobei im Schritt (354) des Aufbereitens die Bilddaten (116, 216) und die weiteren Bilddaten (116, 216) aufbereitet werden, um aufbereitete Bilddaten (236, 238) und weitere aufbereitete Bilddaten (236, 238) zu erhalten.

4. Verfahren (350) gemäß einem der vorangegangenen Ansprüche, wobei der Schritt (354) des Aufbereitens einen Schritt (468) des Fittings von Primitiva (1099) in den ersten Bilddaten (116) und in den zweiten Bilddaten (216) und daraus abgeleiteten ersten Bilddaten (236) und daraus abgeleiteten zweiten Bilddaten (238) umfasst, um ein Ergebnis der gefitteten und/oder eingepassten Primitiva (1099) als Objektinformation (240) bereitzustellen.

5. Verfahren (350) gemäß einem der vorangegangenen Ansprüche, wobei der Schritt (354) des Aufbereitens einen Schritt (470) des Erkennens von Radialsymmetrien in den ersten Bilddaten (116) und in den zweiten Bilddaten (216) und daraus abgeleiteten ersten Bilddaten (236) und daraus abgeleiteten zweiten Bilddaten (238) umfasst, um ein Ergebnis der erkannten Radialsymmetrien als Objektinformation (240) bereitzustellen.

6. Verfahren (350) gemäß einem der vorangegangenen Ansprüche, wobei der Schritt (354) des Aufbereitens einen Schritt (472) des Klassifizierens von einer Mehrzahl von Bildbereichen unter Verwendung zumindest eines Klassifikators in den ersten Bilddaten (116) und in den zweiten Bilddaten (216) und daraus abgeleiteten ersten Bilddaten (236) und daraus abgeleiteten zweiten Bilddaten (238) umfasst, um ein Ergebnis der klassifizierten Bildbereiche als Objektinformation (240) bereitzustellen.

7. Verfahren (350) gemäß einem der vorangegangenen Ansprüche, wobei der Schritt (354) des Aufbereitens einen Schritt (476) des Ermittelns von Aufstandspunkten auf der Fahrbahn (102) unter Verwendung der ersten Bilddaten (116) und der zweiten Bilddaten (216) und daraus abgeleiteten ersten Bilddaten (236) und daraus abgeleiteten zweiten Bilddaten (238) umfasst, um Aufstandspunkte des Fahrzeugs (104, 106) auf der Fahrbahn (102) als Objektinformation (240) bereitzustellen.

8. Verfahren (350) gemäß einem der vorangegangenen Ansprüche, **dadurch gekennzeichnet, dass** im Schritt des Einlesens (352) erste (116) und zweite (216) Bilddaten eingelesen werden, die Bilddaten (116, 216) repräsentieren, die von einer seitlich von der Fahrbahn (102, 1400) angeordneten Bilddatenaufnahmesensors (112, 118) aufgenommen wurden.

9. Verfahren (350) gemäß einem der vorangegangenen Ansprüche, **dadurch gekennzeichnet, dass** im Schritt des Einlesens (352) erste (116) und zweite (216) Bilddaten eingelesen werden, die unter Verwendung einer Blitzeinheit (1420) zur Verbesserung der Ausleuchtung eines Erfassungsbereichs (1410) des Bilddatenaufnahmesensors (112, 118) aufgenommen wurden.

10. Verfahren (350) gemäß einem der vorangegangenen Ansprüche, **dadurch gekennzeichnet, dass** im Schritt des Einlesens (352) ferner Fahrzeugdaten des den Bilddatenaufnahmesensor (112, 118) passierenden Fahrzeugs (104) eingelesen werden, wobei im Schritt des Bestimmens (356) die Anzahl der Achsen unter Verwendung der eingelesenen Fahrzeugdaten bestimmt werden.

11. Achsenzähl-Vorrichtung (114) zur berührungslosen Achsenzählung eines Fahrzeugs (104, 106) auf einer Fahrbahn (102), wobei die Vorrichtung (114) die folgenden Merkmale aufweist:
eine Schnittstelle (230) zum Einlesen von ersten Bilddaten (116) und Einlesen von zweiten Bilddaten (216), wobei die ersten Bilddaten (116) und die zweiten Bilddaten (216) an einer Schnittstelle bereitgestellte Bilddaten (116, 216) eines seitlich von der Fahrbahn (102) angeordneten Bilddatenaufnahmesensors (112, 118) repräsentieren, wobei die ersten Bilddaten (116) und die zweiten Bilddaten (216) ein Abbild des Fahrzeugs (104, 106) umfassen;
eine Einrichtung (232) zum Aufbereiten der ersten Bilddaten (116) und zweiten Bilddaten (216), um aufbereitete erste Bilddaten (236) und aufbereitete zweite Bilddaten (238) zu erhalten, wobei unter Verwendung der ersten Bilddaten (116) und der zweiten Bilddaten (216) in einer Einrichtung des Detektierens zumindest ein Objekt in den ersten Bilddaten (116) und den zweiten Bilddaten (216) detektiert wird und wobei als eine zu den ersten Bilddaten (116) und zweiten Bilddaten (216) zugeordnete das Objekt repräsentierende Objektinformation (240) bereitgestellt wird und wobei in einer Einrichtung des Verfolgens das zumindest eine Objekt unter Verwendung der Objektinformation (240) in den Bilddaten (116, 216, 236, 238) über die Zeit verfolgt wird sowie wobei in einer Einrichtung des Klassifizierens das zumindest eine Objekt unter Verwendung der Objektinformation (240) identifiziert und/oder klassifiziert wird; und
eine Einrichtung (234) zum Bestimmen einer Anzahl von Achsen (108, 110) des Fahrzeugs (104, 106) und/oder einer Zuordnung der Achsen (108, 110) zu ruhenden Achsen (110) des Fahrzeugs (104, 106) und rollenden Achsen (108) des Fahrzeugs (104, 106) unter Verwendung der aufbereiteten ersten Bilddaten (236) und der aufbereiteten zweiten Bilddaten (238) und der den aufbereiteten Bilddaten zugeordneten Objektinformation (240), um die Achsen (108, 110) des Fahrzeugs (104, 106) berührungslos zu zählen, **dadurch gekennzeichnet, dass** die Einrichtung (232) zum Aufbereiten der ersten Bilddaten (116) und zweiten Bilddaten (216) eine Einrichtung zum Stitching umfasst, wobei aus den ersten Bilddaten (116) und den zweiten Bilddaten (216) und daraus abgeleiteten ersten Bilddaten (236) und daraus abgeleiteten zweiten Bilddaten (238) und unter Verwendung der Objektinformation (240) zumindest zwei Bilddaten (116, 216, 236, 238) zusammengefügt werden und als erste aufbereitete Bilddaten (236) bereitgestellt werden und die Einrichtung (232) zum Aufbereiten ferner eine Einrichtung zum homografischen Entzerren umfasst, in dem die Bilddaten (116, 216) und daraus abgeleiteten Bilddaten (236, 238) unter Verwendung der Objektinformation (240) homografisch entzerrt werden und als aufbereitete Bilddaten (236, 238) bereitgestellt werden, sodass eine Seitenansicht des Fahrzeugs (104, 106) in den aufbereiteten Bilddaten (236, 238) homografisch entzerrt ist und die Einrichtung zum Aufbereiten ferner eine Einrichtung zum Analysieren von Bewegungsunschärfen unter Verwendung der ersten Bilddaten und der zweiten Bilddaten und daraus abgeleiteten ersten Bilddaten und daraus abgeleiteten zweiten Bilddaten und der Objektinformation umfasst, um dargestellte Achsen zu ruhenden Achsen des Fahrzeugs und/oder alternativ rollenden Achsen des Fahrzeugs zuzuordnen und als Objektinformation bereitzustellen.

12. Achsenzählsystem (100) für den Straßenverkehr, wobei das Achsenzählsystem (114) zumindest einen Bilddatenaufnahmesensor (112, 118) und eine Achsenzähl-Vorrichtung (114) gemäß Anspruch 11 umfasst, um Achsen (108, 110) eines Fahrzeugs (104, 106) auf einer Fahrbahn (102) berührungslos zu zählen.

13. Computer-Programmprodukt mit Programmcode zur Durchführung des Verfahrens (350) nach einem der Ansprüche 1 bis 10, wenn das Programmprodukt auf einer Vorrichtung und/oder einer Achsenzähl-Vorrichtung (114) ausgeführt wird.

## Claims

1. Method (350) for the contact-free axle counting of a vehicle (104, 106) on a roadway (102), wherein the method (350) has the following steps:
importing (352) first image data (116) and importing second image data (216), wherein the first image data (116) and the second image data (216) are provided to an interface (116, 216) of an image data recording sensor (112, 118) arranged to the side of the roadway (102), wherein the first image data (116) and the second image data (216) comprise an image of the vehicle (104, 106);
processing (354) the first image data (116) and second image data (216), in order to obtain processed first image data (236) and processed second image data (238), wherein, using the first image data (116) and the second image data (216), at least one object is detected in the first image data (116) and the second image data (216) in a detection sub-step (358), and wherein (116) as an object information (240) representing the object and associated with the first image data (116) and second image data (216) is provided, and wherein, in a tracking sub-step (360), the at least one object is tracked over time using the object information (240) in the image data (116, 216, 236, 238), and wherein, in a classification sub-step (362), the at least one object is identified and/or classified using the object information (240); and
determining (356) a number of axles (108, 110) of the vehicle (104, 106), and/or an association of the axles (108, 110) with stationary axles (110) of the vehicle (104, 106) and rolling axles (108) of the vehicle (104, 106), using the processed first image data (236) and the processed second image data (238) and the object information (240) associated with the processed image data (236, 238), in order to count the axles (108, 110) of the vehicle (104, 106) without contact, **characterized in that** the processing step (354) includes a stitching step (466), wherein, from the first image data (116) and the second image data (216) and first image data (236) derived therefrom and second image data (238) derived therefrom, and using the object information (240), at least two image data (116, 216, 236, 238) are merged and provided as first processed image data (236), and the processing step (354) includes a homographic equalization step (464) in which the image data (116, 216) and image data (236, 238) derived therefrom are homographically equalized using the object information (240) and are provided as processed image data (236, 238), so that a side view of the vehicle (104, 106) in the processed image data (236, 238) is homographically equalized, and the processing step includes a motion blur analysis step using the first image data and the second image data and first image data derived therefrom and second image data derived therefrom and the object information, in order to associate shown axles with stationary axles of the vehicle and/or alternatively with rolling axles of the vehicle and provide them as object information.

2. Method according to claim 1, wherein, in the importing step (352), the first image data (116) represent first image data acquired at a first point in time (t1) and the second image data (216) represent image data acquired at a second point in time (t2) differing from the first point in time (t1).

3. Method according to claim 2, wherein, in the importing step (352), further image data (116, 216) are imported at the first point in time (t1), and the second point in time (t2) and at a third point in time differing from the first point in time (t1) and the second point in time (t2), wherein the further image data (116, 216) represent image information acquired by a stereo camera (112) and/or a monocular camera (118) and/or a radar sensor system (118), wherein the image data (116, 216) and the further image data (116, 216) are processed in the processing step (354), in order to obtain processed image data (236, 238) and further processed image data (236, 238).

4. Method (350) according to any one of the preceding claims, wherein the processing step (354) includes a primitive (1099) fitting step (468) in the first image data (116) and in the second image data (216) and first image data (236) derived therefrom and second image data (238) derived therefrom, in order to provide a result of the fitted and/or adjusted primitives (1099) as object information (240).

5. Method (350) according to any one of the preceding claims, wherein the processing step (354) includes a radial symmetry detection step (470) in the first image data (116) and in the second image data (216) and first image data (236) derived therefrom and second image data (238) derived therefrom, in order to provide a result of the detected radial symmetries as object information (240).

6. Method (350) according to any one of the preceding claims, wherein the processing step (354) includes a step (472) of classifying a plurality of image regions using at least one classifier in the first image data (116) and in the second image data (216) and first image data (236) derived therefrom and second image data (238) derived therefrom, in order to provide a result of the classified image regions as object information (240).

7. Method (350) according to any one of the preceding claims, wherein the processing step (354) comprises a step (476) of determining contact points on the roadway (102) using the first image data (116) and the second image data (216) and first image data (236) derived therefrom and second image data (238) derived therefrom, in order to provide contact points of the vehicle (104, 106) on the roadway (102) as object information (240).

8. Method (350) according to one of the preceding claims, **characterized in that**, in the importing step (352), first (116) and second (216) image data are imported that represent image data (116, 216) that were captured by an image data recording sensor (112, 118) arranged at the side of the roadway (102, 1400).

9. Method (350) according to one of the preceding claims, **characterized in that**, in the importing step (352), first (116) and second (216) image data are imported that were captured using a flash unit (1420) to improve the illumination of a detection region (1410) of the image data recording sensor (112, 118).

10. Method (350) according to one of the preceding claims, **characterized in that**, in the importing step (352), vehicle data of the vehicle (104) passing the image data recording sensor (112, 118) are also imported, wherein the number of axles is determined in the determining step (356) using the imported vehicle data.

11. Axle counting device (114) for contact-free axle counting of a vehicle (104, 106) on a roadway (102), wherein the device (114) has the following features:
an interface (230) for importing first image data (116) and importing second image data (216), wherein the first image data (116) and the second image data (216) represent image data (116, 216) of an image data recording sensor (112, 118) arranged to the side of the roadway (102) that are provided to an interface, wherein the first image data (116) and the second image data (216) comprise an image of the vehicle (104, 106);
a device (232) for processing the first image data (116) and second image data (216), in order to obtain processed first image data (236) and processed second image data (238), wherein, using the first image data (116) and the second image data (216), at least one object in the first image data (116) and the second image data (216) is detected in a detection device, and wherein (116) as an object information (240) representing the object and associated with the first image data (116) and second image data (216) is provided, and wherein, in a tracking device, the at least one object is tracked over time using the object information (240) in the image data (116, 216, 236, 238), and wherein, in a classification device, the at least one object is identified and/or classified using the object information (240); and
a device (234) for determining a number of axles (108, 110) of the vehicle (104, 106), and/or an association of the axles (108, 110) with stationary axles (110) of the vehicle (104, 106) and rolling axles (108) of the vehicle (104, 106), using the processed first image data (236) and the processed second image data (238) and the object information (240) associated with the processed image data (236, 238), in order to count the axles (108, 110) of the vehicle (104, 106) without contact, **characterized in that** the device (232) for processing the first image data (116) and second image data (216) comprises a stitching device, wherein, from the first image data (116) and the second image data (216) and first image data (236) derived therefrom and second image data (238) derived therefrom, and using the object information (240), at least two image data (116, 216, 236, 238) are merged and provided as first processed image data (236), and the processing device (232) also comprises a homographic equalization device in which the image data (116, 216) and image data (236, 238) derived therefrom are homographically equalized using the object information (240) and are provided as processed image data (236, 238) so that a side view of the vehicle (104, 106) in the processed image data (236, 238) is homographically equalized, and the processing device also comprises a motion blur analysis device using the first image data and the second image data and first image data derived therefrom and second image data derived therefrom, and the object information, in order to associate shown axles with stationary axles of the vehicle and/or alternatively with rolling axles of the vehicle and provide them as object information.

12. Axle counting system (100) for road traffic, wherein the axle counting system (114) comprises at least one image data recording sensor (112, 118) and an axle counting device (114) according to claim 11, in order to count axles (108, 110) of a vehicle (104, 106) on a roadway (102) in a contact-free manner.

13. Computer program product having program code for implementing the method (350) according to any one of claims 1 to 10 when the program product is executed on a device and/or an axle counting device (114).

## Revendications

1. Procédé (350) de comptage sans contact d'essieux d'un véhicule (104, 106) se trouvant sur une voie de roulement (102), dans lequel le procédé (350) présente les étapes suivantes :
lecture (352) de premières données d'image (116) et lecture de secondes données d'image (216), dans lequel les premières données d'image (116) et les secondes données d'image (216) représentent des données d'image (116, 216) produites au niveau d'une interface d'un capteur d'acquisition de données d'image (112, 118) disposé latéralement à la voie de roulement (102), dans lequel les premières données d'image (116) et les secondes données d'image (216) contiennent une image du véhicule (104, 106) ;
traitement (354) des premières données d'image (116) et des secondes données d'image (216), pour obtenir de premières données d'image traitées (236) et de secondes données d'image traitées (238), dans lequel, en utilisant les premières données d'image (116) et les secondes données d'image (216) dans une sous-étape (358) de détection, au moins un objet est détecté dans les premières données d'image (116) et les secondes données d'image (216) et dans lequel comme une information d'objet (240) qui représente l'objet et qui est associée aux premières données d'image (116) et aux secondes données d'image (216) est produite et dans lequel, dans une sous-étape (360) de suivi, l'au moins un objet est suivi dans le temps en utilisant l'information d'objet (240) dans les données d'image (116, 216, 236, 238) et dans lequel, dans une sous-étape (362) de classification, l'au moins un objet est identifié et/ou classifié en utilisant l'information d'objet (240) ; et
détermination (356) d'un nombre d'essieux (108, 110) du véhicule (104, 106) et/ou d'une affectation des essieux (108, 110) à des essieux fixes (110) du véhicule (104, 106) et des essieux roulants (108) du véhicule (104, 106) en utilisant les premières données d'image traitées (236) et les secondes données d'image traitées (238) et l'information d'objet (240) associée aux données d'image traitées (236, 238), afin de compter sans contact les essieux (108, 110) du véhicule (104, 106), **caractérisé en ce que** l'étape (354) de traitement comprend une étape (466) d'assemblage, dans lequel au moins deux données d'image (116, 216, 236, 238) sont assemblées à partir des premières données d'image (116) et des secondes données d'image (216) et des premières données d'image qui en découlent (236) et des secondes données d'image qui en découlent (238) et en utilisant l'information d'objet (240) et produites sous forme de premières données d'image produits (236) et l'étape (354) de traitement comprend une étape (464) d'égalisation homographique, dans laquelle les données d'image (116, 216) et les données d'image qui en découlent (236, 238) sont égalisées sur le plan homographique en utilisant l'information d'objet (240) et sont produites sous forme de données d'image traitées (236, 238), de sorte qu'une vue latérale du véhicule (104, 106) soit égalisée sur le plan homographique dans les données d'image traitées (236, 238) et l'étape de traitement comprend une étape d'analyse de flous de mouvement en utilisant les premières données d'image et les secondes données d'image et les premières données d'image qui en découlent et les secondes données d'image qui en découlent et l'information d'objet, afin d'affecter les essieux représentés aux essieux fixes du véhicule et/ou en variante aux essieux roulants du véhicule et de les produire sous forme d'information d'objet.

2. Procédé selon la revendication 1, dans lequel dans l'étape (352) de lecture, les premières données d'image (116) représentent de premières données d'image détectées à un premier instant (t1) et les secondes données d'image (216) représentent des données d'images détectées à un deuxième instant (t2) différent du premier instant (t1).

3. Procédé selon la revendication 2, dans lequel dans l'étape (352) de lecture, d'autres données d'image (116, 216) sont lues au premier instant (t1) et au deuxième instant (t2) et à un troisième instant différent du premier instant (t1) et du deuxième instant (t2), dans lequel les autres données d'image (116, 216) représentent une information d'image détectée par une caméra stéréo (112) et/ou une caméra mono (118) et/ou un capteur radar (118), dans lequel dans l'étape (354) de traitement, les données d'image (116, 216) et les autres données d'image (116, 216) sont traitées, afin d'obtenir des données d'image traitées (236, 238) et d'autres données d'image traitées (236, 238).

4. Procédé (350) selon l'une quelconque des revendications précédentes, dans lequel l'étape (354) de traitement comprend une étape (468) d'ajustement de primitives (1099) dans les premières données d'image (116) et dans les secondes données d'image (216) et les premières données d'image qui en découlent (236) et les secondes données d'image qui en découlent (238), afin de produire un résultat des primitives ajustées et/ou adaptées (1099) sous forme d'information d'objet (240).

5. Procédé (350) selon l'une quelconque des revendications précédentes, dans lequel l'étape (354) de traitement comprend une étape (470) de reconnaissance de symétries radiales dans les premières données d'image (116) et dans les secondes données d'image (216) et les premières données d'image qui en découlent (236) et les secondes données d'image qui en découlent (238), afin de produire un résultat des symétries radiales reconnues sous forme d'information d'objet (240).

6. Procédé (350) selon l'une quelconque des revendications précédentes, dans lequel l'étape (354) de traitement comprend une étape (472) de classification d'une pluralité de zones d'image en utilisant au moins un classificateur dans les premières données d'image (116) et dans les secondes données d'image (216) et les premières données d'image qui en découlent (236) et les secondes données d'image qui en découlent (238), afin de produire un résultat de zones d'image classifiées sous forme d'information d'objet (240).

7. Procédé (350) selon l'une quelconque des revendications précédentes, dans lequel l'étape (354) de traitement comprend une étape (476) de détermination de points d'appui sur la voie de roulement (102) en utilisant les premières données d'image (116) et les secondes données d'image (216) et les premières données d'image qui en découlent (236) et les secondes données d'image qui en découlent (238), afin de produire des points d'appui du véhicule (104, 106) sur la voie de roulement (102) sous forme d'information d'objet (240).

8. Procédé (350) selon l'une quelconque des revendications précédentes, **caractérisé en ce que** dans l'étape de lecture (352), des premières (116) et secondes (216) données d'image sont lues, qui représentent des données d'image (116, 216), qui ont été acquises depuis un capteur d'acquisition de données d'image (112, 118) disposé latéralement à la voie de roulement (102, 1400).

9. Procédé (350) selon l'une quelconque des revendications précédentes, **caractérisé en ce que** dans l'étape de lecture (352), des premières (116) et secondes (216) données d'image sont lues, qui ont été acquises en utilisant une unité de déclenchement du flash (1420) pour améliorer l'éclairage de la zone de détection (1410) du capteur d'acquisition de données d'image (112, 118).

10. Procédé (350) selon l'une quelconque des revendications précédentes, **caractérisé en ce que** dans l'étape de lecture (352) en outre, des données de véhicule du véhicule (104) passant devant le capteur d'acquisition de données d'image (112, 118) sont lues, dans lequel dans l'étape de détermination (356), le nombre d'essieux est déterminé en utilisant les données de véhicule lues.

11. Dispositif de comptage d'essieux (114) pour le comptage sans contact d'essieux d'un véhicule (104, 106) se trouvant sur une voie de roulement (102), dans lequel le dispositif (114) présente les caractéristiques suivantes :
une interface (230) pour la lecture de premières données d'image (116) et la lecture de secondes données d'image (216), dans lequel les premières données d'image (116) et les secondes données d'image (216) représentent des données d'image (116, 216) produites au niveau d'une interface d'un capteur d'acquisition de données d'image (112, 118) disposé latéralement à la voie de roulement (102), dans lequel les premières données d'image (116) et les secondes données d'image (216) contiennent une image du véhicule (104, 106) ;
un module (232) pour le traitement des premières données d'image (116) et des secondes données d'image (216), pour obtenir de premières données d'image traitées (236) et de secondes données d'image traitées (238), dans lequel, en utilisant les premières données d'image (116) et les secondes données d'image (216) dans un module de détection, au moins un objet est détecté dans les premières données d'image (116) et les secondes données d'image (216) et dans lequel comme une information d'objet (240) qui représente l'objet et qui est associée aux premières données d'image (116) et aux secondes données d'image (216) est produite et dans lequel, dans un module de suivi, l'au moins un objet est suivi dans le temps en utilisant l'information d'objet (240) dans les données d'image (116, 216, 236, 238) et dans lequel, dans un module de classification, l'au moins un objet est identifié et/ou classifié en utilisant l'information d'objet (240) ; et
un module (234) pour la détermination d'un nombre d'essieux (108, 110) du véhicule (104, 106) et/ou d'une affectation des essieux (108, 110) à des essieux fixes (110) du véhicule (104, 106) et des essieux roulants (108) du véhicule (104, 106) en utilisant les premières données d'image traitées (236) et les secondes données d'image traitées (238) et l'information d'objet (240) associée aux données d'image traitées, afin de compter sans contact les essieux (108, 110) du véhicule (104, 106), **caractérisé en ce que** le module (232) de traitement des premières données d'image (116) et des secondes données d'image (216) comprend un module d'assemblage, dans lequel au moins deux données d'image (116, 216, 236, 238) sont assemblées à partir des premières données d'image (116) et des secondes données d'image (216) et des premières données d'image qui en découlent (236) et des secondes données d'image qui en découlent (238) et en utilisant l'information d'objet (240) et produites sous forme de premières données d'image traitées (236) et le module (232) de traitement comprend en outre un module d'égalisation homographique, dans lequel les données d'image (116, 216) et les données d'image qui en découlent (236, 238) sont égalisées sur le plan homographique en utilisant l'information d'objet (240) et sont produites sous forme de données d'image traitées (236, 238), de sorte qu'une vue latérale du véhicule (104, 106) soit égalisée sur le plan homographique dans les données d'image traitées (236, 238) et le module de traitement comprend en outre un module d'analyse de flous de mouvement en utilisant les premières données d'image et les secondes données d'image et les premières données d'image qui en découlent et les secondes données d'image qui en découlent et l'information d'objet, afin d'affecter les essieux représentés aux essieux fixes du véhicule et/ou en variante aux essieux roulants du véhicule et de les produire sous forme d'information d'objet.

12. Système de comptage d'essieux (100) pour la circulation routière, dans lequel le système de comptage d'essieux (114) comprend au moins un capteur d'acquisition de données d'image (112, 118) et un dispositif de comptage d'essieux (114) selon la revendication 11, afin de compter sans contact les essieux (108, 110) d'un véhicule (104, 106) se trouvant sur une voie de roulement (102).

13. Produit programme informatique comprenant un code de programme pour la réalisation du procédé (350) selon l'une quelconque des revendications 1 à 10, lorsque le produit programme est exécuté sur un dispositif et/ou un dispositif de comptage d'essieux (114).
